# EUROPEAN PATENT SPECIFICATION

(11) **EP 4 303 979 B1**
(45) Date of publication and mention of the grant of the patent: **26.11.2025**
(21) Application number: 22926312.4
(22) Date of filing: 23.05.2022
(51) Int. Cl.: H01M 4/131, H01M 4/66, H01M 10/0525, H01M 10/0567, H01M 10/0568, H01M 10/42, H01M 4/02, H01M 10/0569

(54) **SECONDARY BATTERY, AS WELL AS BATTERY MODULE, BATTERY PACK AND ELECTRIC DEVICE COMPRISING THE SAME**
NICHTWÄSSRIGER ELEKTROLYT, SOWIE SEKUNDÄRBATTERIE, BATTERIEMODUL, BATTERIEPACK UND ELEKTRISCHE VORRICHTUNG DENSELBEN UMFASSEND
BATTERIE SECONDAIRE, AINSI QUE MODULE DE BATTERIE, BLOC-BATTERIE ET DISPOSITIF ÉLECTRIQUE LA COMPRENANT

(43) Date of publication of application: 10.01.2024
(60) Divisional application: 25205834.2
(73) Proprietor: Contemporary Amperex Technology (Hong Kong) Limited, Central, Central And Western District (HK)
(72) Inventor: WU, Zeli, Ningde City, Fujian 352100 (CN); HAN, Changlong, Ningde City, Fujian 352100 (CN); CHEN, Huiling, Ningde City, Fujian 352100 (CN); GUO, Jie, Ningde City, Fujian 352100 (CN); HUANG, Lei, Ningde City, Fujian 352100 (CN); LIU, Wenhao, Ningde City, Fujian 352100 (CN)
(74) Representative: Kraus & Lederer PartGmbB
(86) International application number: PCT/CN2022/094497
(87) International publication number: WO 2023/225799

(56) References cited:
- CN-A- 108 400 376
- CN-A- 108 659 773
- CN-A- 108 933 294
- CN-A- 111 193 071
- CN-A- 111 200 132
- JP-A- 2020 145 104
- US-A1- 2018 212 281
- US-A1- 2022 085 379
- US-A1- 2022 158 246
- GUO ZHAN-SHENG; WANG YU-HUI; ZHU JIAN-YU; FENG JIE-MIN: "Experimental Research of Mechanical Properties for Aluminum Foil", JOURNAL OF EXPERIMENTAL MECHANICS, CN, vol. 31, no. 4, 31 August 2016 (2016-08-31), CN , pages 451 - 457, XP009550727, ISSN: 1001-4888

## Description

### TECHNICAL FIELD

The present application belongs to the technical field of battery, in particular to a non-aqueous electrolyte and a secondary battery, a battery module, a battery pack and an electrical device containing the same.

### BACKGROUND

In recent years, secondary batteries have been widely used in energy-storage power systems such as hydro, thermal, wind and solar power plants, as well as electric tools, electric bicycles, electric motorcycles, electric vehicles, military equipment, aerospace and many other fields. With the application and promotion of secondary batteries, the demand for their energy density is getting higher and higher. Aluminum foil collector does not contribute to the capacity in secondary batteries. The thinning of aluminum foil collector not only can reduce the cost but also can accommodate more active materials in a limited battery shell. Therefore, thinning of aluminum foil collector is one of the most effective measures to improve the energy density of secondary batteries. Although thinning of aluminum foil collector can reduce the cost and improve the energy density of secondary batteries, this solution is difficult to be applied in industry, mainly due to the increase in internal resistance and heat production of the battery after thinning the aluminum foil collector, as well as the deterioration of the processing performance of the positive electrode plate, which is prone to the problem of strip breakage. As a result, the current secondary battery cannot have low cost, high energy density, high power performance, good processing performance and high safety performance at the same time.

CN108 659 773 A discloses a method for potting a battery pack by using a specific potting compound, wherein the battery pack comprises a plurality of battery cells comprising a positive electrode sheet, a negative electrode sheet and a non-aqueous electrolyte. According to this document, the positive electrode comprises an aluminum foil having a thickness of 16 µm as current collector and the positive electrode sheet has a compacted density of 3.12 g/cm³, while the non-aqueous electrolyte comprises 1 mol/L of LiPF₆ dissolved in a mixed solvent of ethylene carbonate (EC), ethyl methyl carbonate (EMC) and diethyl carbonate (DEC) (in a volume ratio of 2:1:5), to which 2%wt. of fluoroethylene carbonate (FEC), 2%wt. of propylene sulfite, 1%wt. of lithium difluoro(oxalato)borate (LiDFOB), and 0.5%wt. of lithium bis(oxalato)borate (LiBOB) are added.

US 2018/212281 A1 describes a lithium secondary battery comprising a cathode, an anode, and an electrolyte disposed between the cathode and the anode. According to preferred embodiments, the electrolyte comprises a lithium salt, a non-aqueous solvent, and an additive mixture including 1%wt. of a disilane compound and 1%wt. of LiDFOB, and the cathode is characterized by an electrode density of 3.6 g/cm³ and comprises an aluminum foil having a thickness of 12 µm as current collector.

JP 2020 145104 A is directed to a lithium-ion secondary battery comprising a positive electrode, a negative electrode, a separator, and a non-aqueous electrolyte solution comprising LiPF₆ as conducting salt, as well as vinylene carbonate (VC) and LiDFOB as additives. According to this document, the positive electrode comprises an aluminum foil having a thickness of 20 µm as current collector and has a press density of 3.2 g/ cm³, while the amount of LiDFOB contained in the electrolyte is 1.3%wt.

CN 111 193 071 A and CN 108 400 376 A also disclose electrolyte compositions comprising LiDFOB as additive, and their use in lithium-ion secondary batteries comprising a positive electrode comprising a current collector made of an aluminum foil with a specific thickness and an active material layer having a specific compaction density.

US 2022/158246 A1 discloses a lithium-ion battery including a battery housing, an electrolyte comprising a lithium salt and an organic solvent, and an electrode assembly comprising a positive electrode plate, a negative electrode plate, and a separator, wherein the positive electrode plate comprises a current collector and an active material layer that is disposed on at least one surface thereof, and the compacted density of the positive electrode plate ranges from 2.0 to 3.5 g/cm³. According to preferred embodiments, the positive electrode current collector is an aluminum foil having a thickness of 8 or 12 µm and the positive electrode plate has an elongation at break of 2.60%.

CN 111 200 132 A also describes a battery including a positive pole plate, a separator, and a negative pole plate, wherein the positive pole plate includes a porous aluminum-containing current collector having a specific thickness and a specific elongation at break.

US 2022/085379 A1 refers to a positive electrode current collector comprising a polymer material-based support layer and an aluminum-based conductive layer disposed on at least one surface thereof, characterized by a specific relationship between the thickness of the aluminum-based conductive layer, the tensile strength of the support layer and the thickness of the support layer.

CN 108 933 294 A discloses an electrolyte for lithium-ion battery, comprising an organic solvent, a lithium salt and an additive mixture comprising a fluorinated lithium oxalatoborate compound, and its use in a lithium-ion battery having an aluminum foil as positive electrode current collector.

### SUMMARY

An object of the present application is to provide a secondary battery, a battery module, a battery pack and an electrical device containing the same, aiming to make the secondary battery using a thinned positive electrode collector to simultaneously have low cost, high energy density, high power performance, good processing performance and high safety performance.

A first aspect of the present application provides a secondary battery comprising a positive electrode plate, and a non-aqueous electrolyte, wherein the positive electrode plate comprises a positive electrode collector and a positive active material layer disposed on at least one surface of the positive electrode collector; wherein the non-aqueous electrolyte comprises a compound shown in Formula 1, in which X and Y each independently represent a fluorine atom, or partially fluorinated or perfluorinated group selected from C1-C10 alkyl group, C2-C10 alkenyl group, C2-C10 alkynyl group,

C6-C8 aryl group, C1-C10 alkoxy group, C2-C10 alkenoxy group, C2-C10 alkynloxy group, and C6-C8 aryloxy group, and at least one of X and Y represents a fluorine atom; 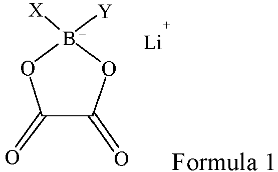 based on the total mass of the non-aqueous electrolyte, the compound shown in Formula 1 is present in an amount of A1% by mass; the positive electrode collector has a thickness of H µm, the positive electrode collector has an elongation at break of Q%, the positive active material layer has a compaction density of P g/cm³, and the secondary battery satisfies: H is from 4 to 14, A1/H is from 0.0015 to 0.20, Q+A1 is from 1 to 4 and P/A1 is from 2 to 340.

The inventors of the present application found in the course of their research that in a secondary battery employing a thinned positive electrode collector, when the non-aqueous electrolyte contains the compound shown in Formula 1 and by controlling the relationship between its content A1% and the thickness H µm of the positive electrode collector, the elongation at break of Q% of the positive electrode collector and the compaction density P g/cm³ of the positive active material layer, the secondary battery satisfies A1/H of 0.0015 to 0.20, Q+A1 of 1 to 4 and P/A1 of 2 to 340, the secondary battery can simultaneously have low cost, high energy density, high power performance, good processing performance and high safety performance.

In any embodiment of the present application, optionally, A1/H is from 0.002 to 0.05, more optionally from 0.01 to 0.05. This is beneficial to improving the strength of the positive electrode collector, improving the processing performance of the positive electrode plate, reducing or even avoiding the occurrence of strip breakage; and it is beneficial to making the secondary battery have high power performance and high safety performance.

In any embodiment of the present application, optionally, Q+A1 is from 1.5 to 3.5, more optionally from 2.0 to 3.5. This is beneficial to improving the strength of the positive electrode collector, improving the processing performance of the positive electrode plate, reducing or even avoiding the occurrence of strip breakage; and it is beneficial to making the secondary battery have high power performance and high safety performance.

In any embodiment of the present application, optionally, P/A1 is from 5 to 340, more optionally from 10 to 340, which is beneficial to improving the power performance and safety performance of the secondary battery.

In any embodiment of the present application, optionally, A1 is from 0.02 to 1.8, more optionally from 0.02 to 0.5. This can improve the defects such as poor power performance, increased safety hazard, and poor processing performance caused by the thinning of the positive electrode collector.

In any embodiment of the present application, optionally, Q is from 0.5 to 3.5, more optionally from 1.5 to 3.5. Thus the resulting positive electrode collector has high strength and good processability and is less susceptible to strip breakage, while contributing to a high safety performance of the secondary battery.

In any embodiment of the present application, optionally, P is from 3.2 to 3.7, more optionally from 3.4 to 3.7, which is beneficial to improving the energy density of the secondary battery.

In any embodiment of the present application, optionally, the non-aqueous electrolyte further comprises a first lithium salt comprising lithium hexafluorophosphate, wherein the lithium hexafluorophosphate is present in an amount of A2% by mass, based on the total mass of the non-aqueous electrolyte.

In any embodiment of the present application, optionally, A2/A1 is from 5 to 650, more optionally from 15 to 300, thereby helping to further improve the capacity retention of the secondary battery while improving problems such as poorer power performance, increased safety hazards and deterioration of processing performance caused by the thinning of the positive electrode collector.

In any embodiment of the present application, optionally, A2 is from 6 to 14.

In any embodiment of the present application, optionally, the non-aqueous electrolyte further comprises a first lithium salt comprising a combination of lithium hexafluorophosphate and lithium bis(fluorosulfonyl)imide, wherein lithium hexafluorophosphate is present in an amount of A2% by mass and lithium bis(fluorosulfonyl)imide is present in an amount of A3% by mass, both based on the total mass of the non-aqueous electrolyte. Optionally, A2 is from 6 to 14, A3 is greater than 0 and less than or equal to 5. In any embodiment of the present application, optionally, A3/A2 is 0.8 or less, more optionally from 0.05 to 0.3. This is beneficial to the formation of interface film with lower impedance.

Optionally, A2/A1 is from 5 to 650, and more optionally from 15 to 300. This helps to further improve the capacity retention of the secondary battery while improving the problems such as deterioration of power performance, increase of safety hazards and deterioration of processing performance caused by the thinning of the positive electrode collector.

In any embodiment of the present application, optionally, the non-aqueous electrolyte further comprises a second lithium salt comprising at least one of lithium tetrafluoroborate, lithium perchlorate, lithium hexafluoroarsenate, lithium difluorophosphate, lithium difluorodioxalate phosphate and lithium tetrafluoroxalate phosphate, wherein the second lithium salt is present in a total amount of A4% by mass in the non-aqueous electrolyte, based on the total mass of the non-aqueous electrolyte. Optionally, A4 is 5 or less, more optionally 2 or less. The second lithium salt may serve as an auxiliary lithium salt that further improves the interfacial properties of the positive and/or negative electrodes, or to improve the ionic conductivity or thermal stability of the non-aqueous electrolyte.

In any embodiment of the present application, optionally, the second lithium salt comprises lithium difluorophosphate. Optionally, a mass ratio α of lithium difluorophosphate to lithium hexafluorophosphate is from 0.01 to 0.15, more optionally from 0.01 to 0.1. Lithium difluorophosphate has a high electrochemical stability and can improve the ionic conductivity of the non-aqueous electrolyte, improve the properties of the positive and/or negative interface films, and also helps to build stable and low impedance positive and/or negative interface films, thus effectively reducing the decomposition of the non-aqueous electrolyte and further improving the power and safety performance of the secondary battery.

In any embodiment of the present application, optionally, the non-aqueous electrolyte further comprises a cyclic carbonate compound, wherein the cyclic carbonate compound is present in an amount of B1% by mass, based on the total mass of the non-aqueous electrolyte. Optionally, B1 is from 0.5 to 20, more optionally from 15 to 18.

In any embodiment of the present application, optionally, B1/20+A1 is from 1 to 3, more optionally from 1 to 2. This helps to further improve the capacity retention of the secondary battery while ameliorating the problems such as poorer power performance, increased safety hazards and deterioration of processing performance caused by the thinning of the positive electrode collector.

In any embodiment of the present application, optionally, the cyclic carbonate compound comprises at least one of ethylene carbonate, propylene carbonate, vinylene carbonate, vinyl ethylene carbonate.

In any embodiment of the present application, optionally, the non-aqueous electrolyte further comprises fluoroethylene carbonate at a mass content of C1%, based on the total mass of the non-aqueous electrolyte. Optionally, 0 < C1 ≤ 2.5, more optionally, 0 < C1 ≤ 2.0. This can effectively improve the cycle performance of the secondary battery.

In any embodiment of the present application, optionally, 0.25≤C1/A1≤25, more optionally, 0.5≤C1/A1≤10. This helps to further improve the cycle performance of the secondary battery while ameliorating the problems such as deterioration of power performance, increase of safety hazards and deterioration of processing performance caused by the thinning of the positive electrode collector.

In any embodiment of the present application, optionally, the non-aqueous electrolyte further comprises a moisture scavenger comprising at least one of hexamethyldisilazane and tris(trimethylsilyl)phosphate. Optionally, the moisture scavenger is present in an amount 2% by mass or less, more optionally from 0.05% to 1% by mass, based on the total mass of the non-aqueous electrolyte. This helps to further improve the power performance, storage performance and safety performance of the secondary battery.

In any embodiment of the present application, optionally, both X and Y represent a fluorine atom.

In any embodiment of the present application, optionally, one of X and Y represents a fluorine atom and the other represents at least one of the group consisting of partially fluorinated or perfluorinated groups: C1-C5 alkyl, C2-C5 alkenyl, C2-C5 alkynyl, phenyl, phenoxy, *C1-C5* alkoxy, C2-C5 alkenoxy and C2-C5 alkynyloxy.

In any embodiment of the present application, optionally, one of X and Y represents a fluorine atom and the other represents at least one of the group consisting of partially fluorinated or perfluorinated groups: methyl, ethyl, n-propyl, isopropyl, n-butyl, tert-butyl, vinyl, propyl, allyl, butadienyl, ethynyl, propynyl, phenyl, methoxy, ethoxy, propoxy, ethylenoxy, propenyloxy, ethynyloxy, propynyloxy and phenoxy.

The presence of the fluorine atom contributes to the formation of a thinner fluorine-containing positive interface film and/or negative interface film, thereby it is beneficial to the uniform transport of lithium ions and also effectively inhibiting formation of lithium dendrite.

**In** any embodiment of the present application, optionally, the compound shown in Formula 1 comprises at least one of the following compounds:

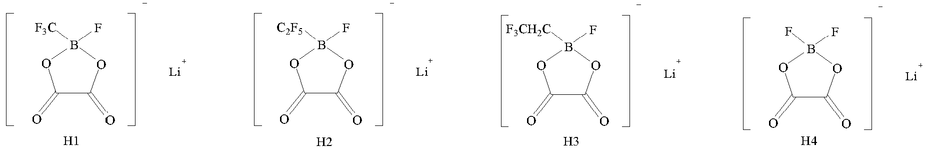

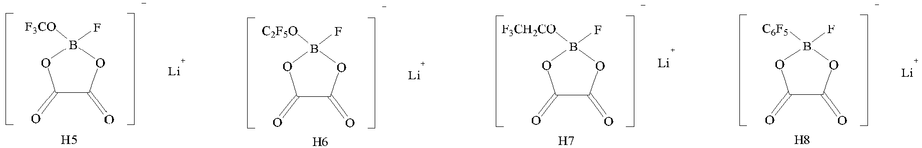

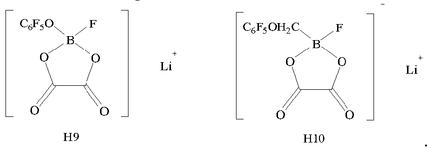

In any embodiment of the present application, optionally, the positive electrode collector is made of aluminum foil or aluminum alloy foil.

A second aspect of the present application provides a battery module comprising the secondary battery of the first aspect of the present application.

A third aspect of the present application provides a battery pack, comprising one of the secondary battery of the first aspect of the present application and the battery module of the second aspect.

A fourth aspect of the present application provides an electrical device comprising at least one of the secondary battery of the first aspect of the present application, the battery module of the second aspect, and the battery pack of the third aspect.

The battery module, battery pack, and electrical device of the present application include the secondary battery provided in the present application and thus have at least the same advantages as the secondary battery.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.

Fig. 1 is a schematic diagram of a secondary battery according to an embodiment of the present application.

Fig. 2 is an exploded view of a secondary battery according to an embodiment of the present application.

Fig. 3 is a schematic diagram of a battery module according to an embodiment of the present application.

Fig. 4 is a schematic diagram of a battery pack according to an embodiment of the present application.

Fig. 5 is an exploded view of the battery pack according to an embodiment of the present application as shown in Fig. 4.

Fig. 6 is a schematic diagram of an electrical device according to an embodiment of the present application using the secondary battery of the present application as power.

In the drawings, the accompanying drawings are not necessarily drawn to actual scale. The reference numerals are defined as follows:
1 battery pack
2 upper case body
3 lower case body
4 battery module
5 battery
51 housing
52 electrode assembly
53 cover plate.

### DETAILED DESCRIPTION

Hereinafter, embodiments of the non-aqueous electrolyte, the secondary battery, the battery module, the battery pack, and the electrical device that specifically disclose the present application will be described in detail with reference to the accompanying drawings as appropriate. However, unnecessary detailed descriptions may be omitted in some cases, for example the detailed description of a well-known item or the repetitive description of an actual identical structure so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "ranges" disclosed in this application are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2-3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such a technical solution should be considered to be included in the disclosure of the present application.

Unless stated otherwise, all technical features and optional technical features of the present application can be combined with each other to form a new technical solution, and such a technical solutions should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprising" and "including" mentioned in the present application means that it is drafted in an open mode or in a close mode. For example, the transition phases "comprising" and "including" may mean that other components not listed may also be included or contained, or only the listed components may be included or contained.

In the present application herein, unless otherwise stated, the term "or" is inclusive. For example, the phrase "A or B" means A, B, or both A and B". More specifically, either of the following conditions meets "A or B": A is true (or present) and B is false (or absent); A is false (or absent) and B is true (or present); or both A and B are true (or present).

Throughout this specification, substituents of compounds are disclosed in groups or ranges. It is expressly anticipated that such description includes each individual subset of members of these groups and ranges. For example, it is expressly anticipated that the term "C1-C6 alkyl" is separately disclosed for C1, C2, C3, C4, C5, C6, C1-C6, C1-C5, C1-C4, C1-C3, C1-C2, C2-C6, C2-C5, C2-C4, C2-C3, C3-C6, C3-C6, C3- C5, C3-C4, C4-C6, C4-C5, and C5-C6 alkyl groups.

In the present application, the terms "plurality" and "multiple" refer to two or more.

In the present application, the thickness of the collector and active material layer has a meaning well known in the art and can be tested by methods known in the art. For example, a spiral micrometer is used for determination.

In the present application, the compaction density of the active material layer has a meaning well known in the art and may be tested by methods known in the art. Compaction density of the active material layer = surface density of the active material layer/thickness of the active material layer. The surface density of the active material layer is known in the art and can be tested by methods known in the art, such as taking a single-sided coated and cold pressed electrode plate (if it is a double-sided coated electrode plate, first wipe off one side of the active material layer), punching into a small round piece with an area of S₀, weighing its weight, recorded as M₁; then wiping off the active material layer of the electrode plate after the above weighing, weighing the weight of the resulting collector, recorded as M₀, and the surface density of the active material layer = (M₁-M₀)/S₀.

In the present application, the elongation at break of the positive electrode collector is the elongation at break at room temperature.

Aluminum foil collector is one of the essential components of secondary batteries, and in order to further improve the energy density of secondary batteries, thinning of aluminum foil collector is still one of the most effective measures at present. Although the thinning of aluminum foil collector can reduce the cost and improve the energy density of the secondary battery, this solution is difficult to be practically applied in industry. The main reasons include the following: first, after the aluminum foil collector is thinned, the resistance of the aluminum foil increases, which leads to an increase in the internal resistance of the battery and poor power performance; second, since aluminum foil is a good thermal conductor material, its thinning will lead to an increase in the heat production of the secondary battery and difficulty in heat dissipation, which increases the safety risks of the secondary battery; third, after the aluminum foil collector is thinned, its own strength deteriorates, and in order to further improve the energy density of the secondary battery, the thinned aluminum foil collector is usually used with a higher compaction density, which makes it easy to break the positive electrode plate during the rolling process and affects the processing performance of the positive electrode plate and the secondary battery.

In addition, high power-type batteries require higher discharge current in use, so the heat generation during discharge is higher, and the decomposition reaction of non-aqueous electrolyte at the interface of positive and negative electrodes increases significantly at high temperature, which causes a significant increase in the positive interface impedance and negative interface impedance, and the secondary battery power performance deteriorates. Currently, in order to obtain high power-type batteries, thickening of aluminum foil collector is one of the commonly used measures.

Therefore, the current solution to improve the energy density of secondary batteries by thinning the positive electrode collector is still facing many difficulties in practical applications, such as deterioration of power performance, increase of safety hazards and deterioration of processing performance.

The inventors of the present application have discovered in the course of their research that by using a suitable non-aqueous electrolyte, they can solve the problems of poor power performance, increased safety hazards and deterioration of processing performance caused by the thinning of the positive electrode collector, thus enabling the secondary battery to simultaneously have low cost, high energy density, high power performance, good processing performance and high safety performance.

Specifically, the present application provides a secondary battery.

A secondary battery, also known as a rechargeable battery or accumulator, is a battery that can continue to be used after the battery is discharged by activating the active material by means of charging. The secondary battery of the present application may be a lithium secondary battery, and in particular may be a lithium ion secondary battery. The secondary battery includes an electrode assembly, a non-aqueous electrolyte, and an outer package for encapsulating the electrode assembly and the non-aqueous electrolyte. The electrode assembly typically includes a positive electrode plate, and the electrode assembly may further include a negative electrode plate and a separator. The thickening is provided between the positive electrode plate and the negative electrode plate, mainly to prevent the positive electrode and the negative electrode from short-circuiting, while allowing lithium ions to pass through. In some embodiments, the positive electrode plate, the thickening and the negative electrode plate may be made into an electrode assembly by a winding process or a laminating process.

The positive electrode plate comprises a positive electrode collector and a positive active material layer disposed on at least one surface of the positive electrode collector, for example, the positive electrode collector having two surfaces opposite each other in the direction of its own thickness, the positive active material layer being disposed on either or both of the two opposite surfaces of the positive electrode collector. The negative electrode plate comprises a negative electrode collector and a negative active material layer disposed on at least one surface of the negative electrode collector, for example, the negative electrode collector having two surfaces opposite each other in the direction of its own thickness, the negative active material layer being disposed on either or both of the two opposite surfaces of the negative electrode collector. During charging and discharging of the secondary battery, lithium ions are embedded and disembedded back and forth between the positive electrode plate and the negative electrode plate. The non-aqueous electrolyte includes lithium salts and organic solvents for acting as a conductor of lithium ions between the positive electrode plate and the negative electrode plate.

In the secondary battery of the present application, the non-aqueous electrolyte comprises a compound shown in Formula 1, in which X and Y each independently represent a fluorine atom, or partially fluorinated or perfluorinated group selected from C1-C10 alkyl group, C2-C10 alkenyl group, C2-C10 alkynyl group of, C6-C8 aryl group, C1-C10 alkoxy group, C2-C10 alkenoxy group, C2-C10 alkynloxy group, and C6-C8 aryloxy group, and at least one of X and Y represents a fluorine atom.

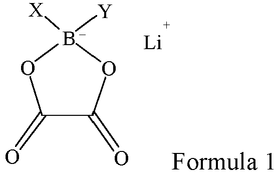

Based on the total mass of the non-aqueous electrolyte, the compound shown in Formula 1 is present in an amount of A1% by mass; the positive electrode collector has a thickness of H µm, the positive electrode collector has an elongation at break of Q%, the positive active material layer has a compaction density of P g/cm³, and the secondary battery satisfies: H is from 4 to 14, A1/H is from 0.0015 to 0.20, Q+A1 is from 1 to 4 and P/A1 is from 2 to 340.

In the present application, the thickness H µm of the positive electrode collector satisfies that H is from 4 to 14. Optionally, H may be from 4 to 13, from 4 to 12, from 4 to 11, from 4 to 10, from 4 to 9, or from 4 to 8.

In the course of their research, the inventors of the present application found that in a secondary battery employing a thinned positive electrode collector, when the non-aqueous electrolyte contains the compound shown in Formula 1 and by controlling the relationship between its content A1% and the thickness H µm of the positive electrode collector, the elongation at break of Q% and the compaction density P g/cm³ of the positive active material layer, so that the secondary battery satisfies A1/H of 0.0015 to 0.20, Q+A1 of 1 to 4 and P/A1 of 2 to 340, the secondary battery can simultaneously have low cost, high energy density, high power performance, good processing performance and high safety performance.

Although the mechanism is unclear, the inventors speculate that possible reasons include the following reasons.

First, the molecular structure of the compound shown in Formula 1 contains oxalate groups, which can be oxidized on the surface of the positive active material in preference to organic solvents, and its oxidation products have specific low-impedance properties, which is beneficial to the formation of a low-impedance positive interface film; at the same time, the B atoms in the molecular structure of the compound shown in Formula 1 are also easily and firmly bound to inorganic components such as LiF in the negative interface film, which can accelerate lithium ion transport and significantly reduce the internal resistance of the battery, so that the secondary battery has high energy density and high power performance and can perform high current discharge.

Second, the B-O bond in the molecular structure of the compound shown in Formula 1 can be combined with Al³⁺ to form a passivation film on the surface of the positive electrode collector, thus helping to improve the strength of the positive electrode collector, improve the processing performance of the positive electrode plate, and reduce or even avoid the occurrence of strip breakage. The molecular structure of the compound shown in Formula 1 contains fluorine atoms, which can be bonded to Al³⁺, thereby increasing the strength of the positive electrode plate, improving the processing performance of the positive electrode plate, and reducing or even avoiding the occurrence of strip breakage, thus making it possible for the practical application of thinning positive electrode collector.

Third, the compound shown in Formula 1 has a higher thermal stability of its own, for example, better than the common LiPF₆, thereby helping to improve the overall heat resistance of the non-aqueous electrolyte; at the same time, the compound shown in Formula 1 is less sensitive to water than LiPF₆, thereby it is beneficial to improving the water resistance of the non-aqueous electrolyte, reducing HF formation and lowering the acidity of the non-aqueous electrolyte. Therefore, the non-aqueous electrolyte of the present application can have high thermal and electrochemical stability, which can reduce the decomposition of the non-aqueous electrolyte at high temperature and lower the internal resistance of the battery. According to Joule's law, the heat production of the secondary battery is directly related to the internal resistance of the battery, so when the internal resistance of the battery is reduced, the heat production of the secondary battery is also reduced, which can make the secondary battery have high energy density and high power performance and high safety performance at the same time.

Fourth, the inventors also surprisingly found that since the anions in the compound shown in Formula 1 are easily reduced, the lithium ions dissociated from its molecular structure can also become active lithium ions and contribute part of the capacity, thus helping to further increase the energy density of the secondary battery.

Thus, when the non-aqueous electrolyte contains the compound shown in Formula 1, it helps to form a passivation film on the surface of the positive electrode collector and improve the processing performance of the positive electrode plate and the secondary battery; it also helps to form a low-impedance interface film on the surface of the positive active material, improving the power performance and safety performance of the secondary battery, and it helps to increase the number of active lithium ions, contributing part of the capacity. However, the inventors of the present application found in further research that the content of the compound shown in Formula 1 also needs to be reasonably matched with the thickness of the positive electrode collector and the compaction density of the positive active material layer to reduce the negative impact of the thinned positive electrode collector on the power performance, processing performance and safety performance, so that the secondary battery can simultaneously have low cost, high energy density, high power performance, good processing performance and high safety performance.

In the present application, the content A1% of the compound shown in Formula 1 and the thickness H µm of the positive electrode collector satisfy that A1/H is from 0.0015 to 0.20, whereby the B-O bond in the molecular structure of the compound shown in Formula 1 can better bond with Al³⁺ to form a passivation film with a suitable thickness on the surface of the positive electrode collector, thereby helping to improve the strength of the positive electrode collector and improve the processing performance of the positive electrode plate, and reduce or even avoid the occurrence of strip breakage. If A1/H is less than 0.0015, the positive electrode collector is thicker and the content of the compound shown in Formula 1 is lower, so there may be no enough compound of Formula 1 bonded with Al³⁺ to form a passivation film on the surface of the positive electrode collector, which results in poor processing performance of the positive electrode plate and the secondary battery; if A1/H is greater than 0.20, the positive electrode collector is thinner and the content of the compound of Formula 1 is higher, resulting in the formation of a thicker interface film, as a result, the positive interface impedance and/or negative interface impedance is higher, which leads to higher internal resistance and heat production of the battery, and the power performance and safety performance of the secondary battery deteriorates. Optionally, A1/H is from 0.002 to 0.15, from 0.002 to 0.1, from 0.002 to 0.08, from 0.002 to 0.07, from 0.002 to 0.06, from 0.002 to 0.05, from 0.005 to 0.15, from 0.005 to 0.1, from 0.005 to 0.08, from 0.005 to 0.07, from 0.005 to 0.06, from 0.005 to 0.05, from 0.01 to 0.15, from 0.01 to 0.1, from 0.01 to 0.08, from 0.01 to 0.07, from 0.01 to 0.06, or from 0.01 to 0.05.

In the present application, the content A1% of the compound shown in Formula 1 and the elongation at break Q% of the positive electrode collector satisfy that Q+A1 is from 1 to 4. As a result, the B-O bond in the molecular structure of the compound shown in Formula 1 can better bond with Al³⁺ to form a passivation film with a suitable thickness on the surface of the positive electrode collector, thereby helping to increase the strength of the positive electrode collector, improve the processability of the positive electrode plate, reduce or even avoid the occurrence of strip breakage. If Q+A1 is less than 1, there is no enough compounds shown in Formula 1 to bond with Al³⁺ to form a passivation film on the surface of the positive electrode collector, and the ductility of the positive electrode collector is poor, which makes it easy to break the strip during the rolling process, resulting in that the processing performance of the positive electrode plate and the secondary battery deteriorates; if Q+A1 is greater than 4, the ductility of the positive electrode collector is high and the pressure resistance is good, but it is not puncture resistant and is prone to breakage and to occur large burrs when it is squeezed by sharp materials (e.g., hard carbon particles of sharp shape), causing a higher risk of short circuit in the battery, thus the safety performance of the secondary battery is still not effectively improved. At the same time, more compounds shown in Formula 1 will form a thicker interface film, thus the positive interface impedance and/or negative interface impedance will be high and the power performance and safety performance of the secondary battery will be poor. Optionally, Q+A1 is from 1.5 to 4, from 1.8 to 4, from 2.0 to 4, from 2.2 to 4, from 2.4 to 4, from 2.6 to 4, from 2.8 to 4, from 3.0 to 4, from 1.5 to 3.5, from 1.8 to 3.5, from 2.0 to 3.5, from 2.2 to 3.5, from 2.4 to 3.5, from 2.6 to 3.5, from 2.8 to 3.5, or from 3.0 to 3.5.

In the present application, the content A1% of the compound shown in Formula 1 and the compaction density P g/cm³ of the positive active material layer satisfy that P/A1 is from 2 to 340, whereby the compound shown in Formula 1 helps to form a low impedance interface film on the surface of the positive active material and reduce the positive interface impedance; it also helps the B atoms in the molecular structure of the compound shown in Formula 1 to better bond with the O atoms in the positive active material, thereby reducing the charge transfer impedance and lithium ion body phase diffusion resistance of the positive active material, and thus it can reduce the internal resistance and heat production of the battery and improve the power performance and safety performance of the secondary battery. If P/A1 is less than 2, the compaction density of the positive active material layer is smaller and the content of the compound shown in Formula 1 is higher, resulting in the formation of an excessively thick interface film, as a result, the positive interface impedance and/or negative interface impedance is higher, which leads to higher internal resistance and heat production, and the power performance and safety performance of the secondary battery is poor; if P/A1 is greater than 340, the compaction density of the positive active material layer is larger and the content of the compound shown in Formula 1 is lower, thus there is no enough compounds shown in Formula 1 to form a low impedance interface film on the surface of the positive active material, and the charge transfer impedance of the positive active material and the lithium ion phase diffusion resistance of the positive active material are high, resulting in higher internal resistance and heat production, and thus the power performance and safety performance of the secondary battery is poor. Optionally, P/A1 is from 2 to 200, from 2 to 100, from 2 to 75, from 2 to 50, from 2 to 35, from 2 to 30, from 2 to 25, from 2 to 20, from 2 to 15, from 3.5 to 340, from 3.5 to 200, from 3.5 to 100, from 3.5 to 75, from 3.5 to 50, from 3.5 to 35, from 3.5 to 30, from 3.5 to 25, from 3.5 to 20, from 3.5 to 15, from 5 to 340, from 5 to 200, from 5 to 100, from 5 to 75, from 5 to 50, from 5 to 35, from 5 to 30, from 5 to 25, from 5 to 20, from 10 to 340, from 10 to 200, from 10 to 100, from 10 to 75, from 10 to 50, from 10 to 35, from 10 to 30, from 10 to 25, or from 10 to 20.

In some embodiments, optionally, the secondary battery satisfies: H is from 4 to 14, A1/H is from 0.01 to 0.05, Q+A1 is from 1.5 to 3.5 and P/A1 is from 10 to 340. More optionally, the secondary battery satisfies: H is from 4 to 14, A1/H is from 0.01 to 0.05, Q+A1 is from 2.0 to 3.5 and P/A1 is from 10 to 340.

In the present application, at least one of X and Y represents a fluorine atom, and the presence of the fluorine atom contributes to the formation of a thinner positive interface film and/or a negative interface film, thereby it is beneficial to uniform lithium ion transport and also effectively inhibiting the formation of lithium dendrite. In some embodiments, one of X and Y represents a fluorine atom and the other represents at least one of the group consisting of partially fluorinated or perfluorinated group groups: C1-C5 alkyl, C2-C5 alkenyl, C2-C5 alkynyl, phenyl, phenoxy, C1-C5 alkoxy, C2-C5 alkenoxy and C2-C5 alkynyloxy. Optionally, one of X and Y represents a fluorine atom and the other represents at least one of the group consisting of partially fluorinated or perfluorinated groups: methyl, ethyl, n-propyl, isopropyl, n-butyl, tert-butyl, vinyl, propyl, allyl, butadienyl, ethynyl, propynyl, phenyl, methoxy, ethoxy, propoxy, ethylenoxy, propenyloxy, ethynyloxy, propynyloxy and phenoxy.

In some embodiments, both X and Y represents fluorine atoms.

As an example, the compound shown in Formula 1 comprises at least one of the following compounds:

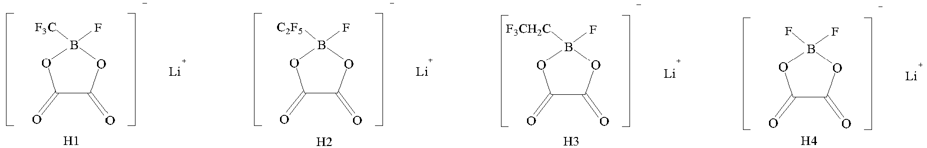

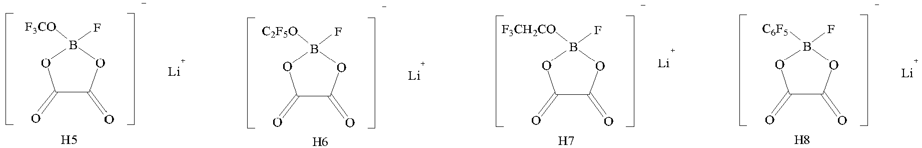

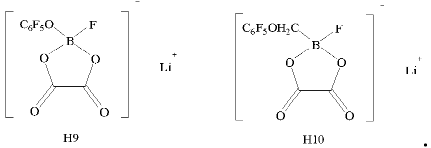

Optionally, in some embodiments, the positive electrode collector is made of aluminum foil or aluminum alloy foil. To improve the corrosion resistance and strength of the positive electrode collector, optionally, an aluminum foil with a purity of 99.99% or more is used. As an aluminum alloy foil, it contains at least one of iron, magnesium, zinc, manganese and silicon in addition to the aluminum, for example, the aluminum alloy foil may be an Al-Fe alloy foil, an Al-Mn alloy foil or an Al-Mg alloy foil. The aluminum alloy foil optionally contains from 95% to 99.5% by mass of aluminum, and more optionally from 98% to 99.5% by mass.

In some embodiments, A1 satisfies that A1 is from 0.02 to 1.8. Optionally, A1 is from 0.02 to 1.6, from 0.02 to 1.4, from 0.02 to 1.2, from 0.02 to 1.0, from 0.02 to 0.8, from 0.02 to 0.7, from 0.02 to 0.6, from 0.02 to 0.5, from 0.05 to 1.6, from 0.05 to 1.4, from 0.05 to 1.2, from 0.05 to 1.0, from 0.05 to 0.8, from 0.05 to 0.7, from 0.05 to 0.6, from 0.05 to 0.5, from 0.1 to 1.6, from 0.1 to 1.4, from 0.1 to 1.2, from 0.1 to 1.0, from 0.1 to 0.8, from 0.1 to 0.7, from 0.1 to 0.6, or from 0.1 to 0.5. When the content of the compounds shown in Formula 1 is within the suitable range, a passivation film with an appropriate thickness can be formed on the surface of the positive electrode collector and a low-impedance interface film can be formed on the surface of the positive active material, thus ameliorating the defects such as deterioration of power performance, increase of safety hazards and deterioration of processing performance caused by the thinning of the positive electrode collector. In addition, it can effectively avoid the following situations: when the content of the compound shown in Formula 1 is lower, there is no enough compound shown in Formula 1 to bond with Al³⁺ to form a passivation film on the surface of the positive electrode collector, resulting in poor processing performance of the positive electrode and secondary battery; when the content of the compound shown in formula 1 is higher, the positive interface impedance and/or negative interface impedance increases, the internal resistance and heat production of the battery increases, and the power performance and safety performance of the secondary battery deteriorate.

In some embodiments, Q is from 0.5 to 3.5. Optionally, Q is from 1 to 3.5, from 1.5 to 3.5, from 1.8 to 3.5, from 2.0 to 3.5, from 2.2 to 3.5, from 2.4 to 3.5, from 2.6 to 3.5, from 2.8 to 3.5, or from 3.0 to 3.5. When the elongation at break of the positive electrode collector is within a suitable range, the positive electrode collector has high strength as well as good processability and is not easy to break the strip. It can effectively avoid the following situations: when the elongation at break of the positive electrode collector is smaller, the ductility of the positive electrode collector is poor, and it is easy to break the strip during the rolling process, resulting in poor processing performance of the positive electrode and the secondary battery; when the elongation at break of the positive electrode collector is larger, it is not resistant to puncture, and it is easy to break and appear large burrs when it is squeezed by sharp materials, causing a higher risk of short circuit in the battery. As a result, the safety performance of the secondary battery is still not effectively improved.

In some embodiments, P is from 3.2 to 3.7. Optionally, P is from 3.3 to 3.7, from 3.4 to 3.7, from 3.5 to 3.7, from 3.2 to 3.6, from 3.3 to 3.6, from 3.4 to 3.6, or from 3.5 to 3.6. When the compaction density of the positive active material layer is in the higher range, it helps to improve the energy density of the secondary battery.

In some embodiments, the secondary battery satisfies: A1/H is from 0.005 to 0.15, Q+A1 is from 1 to 4 and P/A1 is from 2 to 100. In particular, the secondary battery satisfies A1/H of 0.005 to 0.15, Q+A1 of 1 to 4 and P/A1 of 2 to 100 when H is from 11 to 14, optionally from 12 to 14, from 12 to 13. Optionally, the secondary cell satisfies A1/H of 0.005 to 0.1, Q+A1 of 1.5 to 3.5 and P/A1 of 5 to 75.

In some embodiments, the secondary battery satisfies A1/H of 0.006 to 0.1, Q+A1 of 1 to 4 and P/A1 of 2 to 100 when the thickness H µm of the positive electrode collector satisfies that H is above 4 and below 11, optionally below 10, below 9, below 8. In particular, the secondary battery satisfies A1/H of 0.006 to 0.1, Q+A1 of 1 to 4 and P/A1 of 2 to 100 when H is from 11 to 14, optionally from 12 to 14, from 12 to 13. Optionally, the secondary cell satisfies A1/H of 0.005 to 0.1, Q+A1 of 1.5 to 3.5 and P/A1 of 5 to 75.

### [Lithium salt]

In some embodiments, the non-aqueous electrolyte comprises a first lithium salt, the first lithium salt comprising lithium hexafluorophosphate (LiPF₆) or a combination of lithium hexafluorophosphate (LiPF₆) and lithium bis(fluorosulfonyl)imide (LiFSI). Lithium hexafluorophosphate has the property of high ionic conductivity, whereby when its content is in a suitable range, it helps to improve the overall ionic conductivity of the non-aqueous electrolyte, accelerate lithium ion transport and improve the capacity retention of the secondary battery. However, the thermal stability of lithium hexafluorophosphate is poor in high temperature environment, and it will decompose to form PF₅ at higher temperature. PF₅ reacts with water to form HF, which will easily corrode the positive active material and increase the battery flatulence. When the non-aqueous electrolyte contains both the compound shown in Formula 1 and lithium hexafluorophosphate, the compound shown in Formula 1 can react with lithium hexafluorophosphate to form compound LiPF₄C₂O₄, thus reducing the decomposition of partial lithium hexafluorophosphate and the formation of HF, and thus the secondary battery can have good cycle performance. The chemical formula of lithium bis(fluorosulfonyl)imide is F₂NO₄S₂ . Li. The N atom is connected with two electron-absorbing sulfonyl groups, which makes the charge on the N atom fully dissociated, and thus lithium bis(fluorosulfonyl)imide has low lattice energy and is easy to dissociate, which can improve the ionic conductivity of non-aqueous electrolyte and reduce the viscosity of non-aqueous electrolyte, In addition, lithium bis(fluorosulfonyl)imide has good resistance to high temperature and is not easily hydrolyzed, which can form a thinner, lower impedance and more thermally stable interface film on the surface of the negative active material, thus reducing the side reaction between the negative active material and the non-aqueous electrolyte. However, lithium bis(fluorosulfonyl)imide tends to corrode the positive electrode collector, so its content should not be excessively high.

Optionally, in some embodiments, the lithium hexafluorophosphate is present in an amount of A2% by mass, A2 being from 6 to 14, based on the total mass of the non-aqueous electrolyte. More optionally, A2 is from 6 to 12, from 6 to 10, from 8 to 14, from 8 to 12, or from 8 to 10.

In some embodiments, optionally, the lithium bis(fluorosulfonyl)imide is present in an amount of A3% by mass, A3 being greater than 0 and less than or equal to 5, based on the total mass of the non-aqueous electrolyte. More optionally, A3 is from 0.1 to 2.5, from 0.1 to 2, from 0.1 to 1.5, from 0.1 to 1, from 0.2 to 2.5, from 0.2 to 2, from 0.2 to 1.5, from 0.2 to 1, from 0.5 to 2.5, from 0.5 to 2, from 0.5 to 2, from 0.5 to 1.5, or from 0.5 to 1.

In some embodiments, optionally, A3/A2 is 0.8 or less, more optionally from 0.01 to 0.8, from 0.05 to 0.8, from 0.1 to 0.8, from 0.01 to 0.6, from 0.05 to 0.6, from 0.1 to 0.6, from 0.01 to 0.4, from 0.05 to 0.4, from 0.1 to 0.4, from 0.01 to 0.3, from 0.05 to 0.3, or from 0.1 to 0.3.The resulting non-aqueous electrolyte is less prone to hydrolysis and is able to have a higher thermal stability, at the same time, contributing to the formation of a lower-impedance interface film.

In some embodiments, A2/A1 is from 5 to 650, based on the total mass of the non-aqueous electrolyte. Lithium hexafluorophosphate has the property of high ionic conductivity, and the reasonable combination of the content A1% of the compound shown in Formula 1 and the content A2% of lithium hexafluorophosphate helps to further improve the capacity retention of the secondary battery while improving the problems such as deterioration of power performance, increase of safety hazards and deterioration of processing performance brought about by the thinning of the positive electrode collector. In addition, it can effectively avoid the following situations: when the content of lithium hexafluorophosphate is high and the content of compound shown in Formula 1 is low, there may be more PF₅ in the non-aqueous electrolyte, which leads to more decomposition reactions in the non-aqueous electrolyte, and at the same time, the interface film formed by the compound shown in Formula 1 in the positive electrode is not uniform and dense enough to prevent the corrosion of HF on the positive active material and a series of side reactions caused by it, thereby the secondary battery produces higher gas and heat, and the power performance, storage performance and safety performance may deteriorate When the content of lithium hexafluorophosphate is low and the content of the compound shown in Formula 1 is high, the capacity retention rate of the secondary battery may deteriorate because the compound shown in Formula 1 is not easily dissociated in the non-aqueous electrolyte and the anions and cations are easily combined, resulting in a decrease in the ionic conductivity of the non-aqueous electrolyte. Optionally, A2/A1 is from 5 to 500, from 5 to 300, from 5 to 250, from 5 to 200, from 5 to 150, from 5 to 100, from 5 to 75, from 5 to 50, from 10 to 500, from 10 to 300, from 10 to 250, from 10 to 200, from 10 to 150, from 10 to 100, from 10 to 75, from 10 to 50, from 15 to 500, from 15 to 300, from 15 to 250, from 15 to 200, from 15 to 150, from 15 to 100, from 15 to 75, or from 15 to 50.

In some embodiments, the non-aqueous electrolyte may further comprise a second lithium salt, the second lithium salt comprising at least one of lithium tetrafluoroborate (LiBF₄), lithium perchlorate (LiClO₄), lithium hexafluoroarsenate (LiAsF₆), lithium difluorophosphate (LiPO₂F₂), lithium difluorodioxalate phosphate (LiDFOP), and lithium tetrafluoroxalate phosphate (LiTFOP). The second lithium salt may serve as an auxiliary lithium salt to further improve the interfacial properties of the positive and/or negative electrodes, or to improve the ionic conductivity or thermal stability of the non-aqueous electrolyte.

Optionally, the second lithium salt is present in a total amount of A4% in the non-aqueous electrolyte, with A4 being below 5, more optionally below 2, based on the total mass of the non-aqueous electrolyte.

Optionally, in some embodiments, the second lithium salt comprises lithium difluorophosphate (LiPO₂F₂), lithium tetrafluoroxalate phosphate (LiTFOP), or a combination thereof, and more optionally, the second lithium salt comprises lithium difluorophosphate (LiPO₂F₂). Lithium difluorophosphate has high electrochemical stability, can improve the ionic conductivity of the non-aqueous electrolyte, improve the properties of the positive interface film and/or the negative interface film, and helps to build a stable and low impedance positive interface film and/or negative interface film, so as to effectively reduce the decomposition of the non-aqueous electrolyte and further improve the power performance and safety performance of the secondary battery. Optionally, the mass ratio α of lithium difluorophosphate to lithium hexafluorophosphate is from 0.01 to 0.15, more optionally from 0.01 to 0.1.

In some embodiments, optionally, A1+A2+A3+A4 is from 10 to 20, more optionally from 12 to 16.

### [Organic solvent]

In some embodiments, the non-aqueous electrolyte comprises an organic solvent, the organic solvent comprising at least one of a cyclic carbonate compound, a chain carbonate compound, and a carboxylic ester compound. Optionally, the cyclic carbonate compound may include at least one of ethylene carbonate (EC), propylene carbonate (PC), vinylene carbonate (VC), and vinyl ethylene carbonate (VEC). Optionally, the chain carbonate compound may comprise at least one of methyl ethyl carbonate (EMC), diethyl carbonate (DEC), dimethyl carbonate (DMC), dipropyl carbonate (DPC), methyl propyl carbonate (MPC), ethyl propyl carbonate (EPC). Optionally, the carboxylic ester compound may comprise at least one of methyl formate (MF), methyl acetate (MA), ethyl acetate (EA), propyl acetate (PA), methyl propionate (MP), ethyl propionate (EP), propyl propionate (PP), methyl butyrate (MB), and ethyl butyrate (EB).

Optionally, in some embodiments, the organic solvent comprises at least a cyclic carbonate compound and a chain carbonate compound. If the content of the lithium salt such as lithium hexafluorophosphate is higher, the viscosity of the non-aqueous electrolyte will increase and the ionic conductivity of the non-aqueous electrolyte will decrease, which is not conducive to the transport of lithium ions. In contrast, cyclic carbonate compounds can increase the ionic conductivity of the non-aqueous electrolyte due to their high dielectric constant, and chain carbonate compounds can reduce the viscosity of the non-aqueous electrolyte due to their low viscosity. Thus, when the organic solvent includes both the cyclic carbonate compound and the chain carbonate compound, it helps to make the non-aqueous electrolyte have a suitable viscosity and ionic conductivity, which in turn facilitates the transport of lithium ions.

The cyclic carbonate compound has a high dielectric constant, which helps to increase the ionic conductivity of the non-aqueous electrolyte, but is prone to decomposition reactions that affect the storage performance of the secondary battery, and therefore, its content needs to be controlled within a suitable range. In some embodiments, the mass content of the cyclic carbonate compound is B1%, with B1 greater than 0 and less than or equal to 20, based on the total mass of the non-aqueous electrolyte. Optionally, B1 is from 0.5 to 20, from 1 to 20, from 2 to 20, from 5 to 20, from 10 to 20, from 12 to 20, from 15 to 20, or from 15 to 18.

In some embodiments, the mass content of the chain carbonate compound is B2%, B2 being from 45 to 80, based on the total mass of the non-aqueous electrolyte. Optionally, B2 is from 50 to 80, from 55 to 80, from 60 to 80, or from 60 to 75.

The carboxylic ester compound has the advantage of low viscosity and high dielectric constant, and its application in the non-aqueous electrolyte helps the non-aqueous electrolyte to have a suitable viscosity and ionic conductivity, which in turn facilitates lithium ion transport and improves the rate performance of the secondary battery. The carboxylic ester compound can improve the power performance of the secondary battery, but its oxidation resistance is poor and it is prone to decomposition when stored in a high charge state, so its content should not be excessively high. In some embodiments, the mass content of the carboxylic ester compound is B3%, in which B3 is from 0 to 15, based on the total mass of the non-aqueous electrolyte. In some embodiments, B3 may be 0. In some embodiments, optionally, B3 is from 2 to 15, from 2 to 10, from 2 to 8, or from 2 to 5.

The organic solvents of the present application may further comprise solvents other than the cyclic carbonate compounds, chain carbonate compounds, and carboxylic ester compounds described above. As examples, the other solvents may include sulfone solvents, such as sulfolane (SF), methyl sulfonyl methane (MSM), ethyl methyl sulfone (EMS), and ethyl sulfonyl ethane (ESE).

In some embodiments, the content A1% of the compound shown in Formula 1 and the content B1% of the cyclic carbonate compound satisfy that B1/20+A1 is from 1 to 3, optionally from 1 to 2, from 1 to 1.8, from 1 to 1.6, or from 1 to 1.4. The content A1% of the compound shown in Formula 1 and the content B1% of the cyclic carbonate compound, when reasonably matched, help to further improve the capacity retention of the secondary battery while ameliorating the problems such as deterioration of power performance, increase of safety risks and deterioration of processing performance caused by the thinning of the positive electrode collector. In addition, it can effectively avoid the following situations: when the content of both the compound shown in Formula 1 and the cyclic carbonate compound is high, the internal resistance and gas production of the battery is high, which may affect the power performance and storage performance of the secondary battery; when the content of both the compound shown in Formula 1 and the cyclic carbonate compound is low, the ionic conductivity of the non-aqueous electrolyte is low, and at the same time there may be no enough of the compound shown in Formula 1 to form passivation films on the surface of the positive electrode collector and low-impedance interface films on the surface of the positive active material, as a result, the processing performance of the positive electrode may be poor, and the power performance, safety performance and cycle performance of the secondary battery may also deteriorate.

### [Additives]

In some embodiments, the non-aqueous electrolyte may further comprise additives including, for example, at least one of halogen-substituted cyclic carbonate compounds, nitrile compounds, phosphonitrile compounds, aromatic hydrocarbon and halogenated aromatic hydrocarbon compounds, isocyanate compounds, acid anhydride compounds, sulfate compounds, sulfite compounds, sulfonate compounds, and disulfonate compounds. The present application is not particularly limited to the types of these additives, as long as they do not detract from the main subject matter of the present application. Optionally, the total mass content of these additives is 5% or less, more optionally 2.5% or less, based on the total mass of the non-aqueous electrolyte.

Optionally, in some embodiments, the non-aqueous electrolyte may further comprise fluoroethylene carbonate (FEC) at a mass content of C1%, 0 ≤ C1 ≤ 2.5, based on the total mass of the non-aqueous electrolyte. For example, C1 is 0, 0.10, 0.20, 0.50, 0.75, 1.0, 1.25, 1.50, 1.75, 2.0, 2.25, 2.50 or in a range consisting of any of the above values. Optionally, 0 < C1 ≤ 2.5, 0 < C1 ≤ 2.25, 0 < C1 ≤ 2.0, 0 < C1 ≤ 1.75, 0 < C1 ≤ 1.5, 0 < C1 ≤ 1.25, 0 < C1 ≤ 1.0, 0 < C1 ≤ 0.75, or 0 < C1 ≤ 0.5.

For secondary batteries, fluoroethylene carbonate can undergo reductive decomposition reactions at higher potentials and form interface films with certain flexibility on the surface of the negative active material, and also inhibit the reductive decomposition of organic solvents at lower potentials as well as inhibit the embedding of organic solvents into the negative active material. Therefore, when the non-aqueous electrolyte contains fluoroethylene carbonate, it can effectively improve the cycle performance of the secondary battery. In addition, fluoroethylene carbonate is resistant to high voltage oxidation, which is conducive to matching the high-voltage negative active material, thereby facilitating further enhancement of the energy density of the secondary battery.

In some embodiments, the content A1% of the compound shown in Formula 1 and the content C1% of fluoroethylene carbonate also satisfy 0.25 ≤ C1/A1 ≤ 25. Optionally, 0.5 ≤ C1/A1 ≤ 15, 0.5 ≤ C1/A1 ≤ 10, 0.5 ≤ C1/A1 ≤ 5, 0.5 ≤ C1/A1 ≤ 4, 0.5 ≤ C1/A1 ≤ 3, 0.5 ≤ C1/A1≤2.5, 0.5≤C1/A1≤2, 0.5≤C1/A1≤1.5 or 0.5≤C1/A1≤1.0.

When the non-aqueous electrolyte contains fluoroethylene carbonate, it can effectively improve the cycle performance of the secondary battery, but fluoroethylene carbonate easily decomposes and forms HF, which will destroy the positive interface film and corrode the positive active material and increases the heat production and gas production of the secondary battery. The compound shown in Formula 1 can be used as a stabilizer for the positive active material, and the B atom in its structure has the function of interacting with the O atom on the surface of the positive active material, thus stabilizing the crystal structure of the positive active material and reducing the damage of HF to the crystal structure of the positive active material. Therefore, the use of the compound shown in Formula 1 in combination with fluoroethylene carbonate is beneficial to giving full play to the further improvement of the cycle performance of the secondary battery by fluoroethylene carbonate. In addition, reasonable control of the relationship between the content A1% of the compound shown in Formula 1 and the content C1% of fluoroethylene carbonate to meet 0.25≤C1/A1≤25 can give full play to the synergistic effect of the compound shown in Formula 1 and fluoroethylene carbonate, thus helping to further improve the cycle performance of the secondary battery on the premise of improving the deterioration of power performance, the increase of safety hazards and the deterioration of processing performance brought about by the thinning of the positive electrode collector. At the same time, fluoroethylene carbonate has a high dielectric constant, and the relationship between the content A1% of the compound shown in formula 1 and the content C1% of fluoroethylene carbonat is reasonably controlled to meet 0.25≤C1/A1≤25, which can also ensure the formation of free ions of anions and cations of the compound shown in Formula 1, avoid the association between anion and cation, improve the ionic conductivity of the non-aqueous electrolyte and improve the cycle performance of the secondary cycle performance of the battery on the one hand, and further increase the number of active lithium ions on the other hand.

In some embodiments, the non-aqueous electrolyte may further comprise a moisture scavenger, which helps to reduce the water content of the non-aqueous electrolyte and reduce a series of side reactions caused by water, thereby reducing the amount of gas and heat produced by the secondary battery and enabling the secondary battery to have better storage performance and safety performance. Optionally, in some embodiments, the moisture scavenger includes hexamethyldisilazane (HMDS), tris(trimethylsilyl)phosphate (TMSP), or the combination thereof. In addition to effectively reducing the water content of the non-aqueous electrolyte, these two moisture scavengers can react with lithium hexafluorophosphate and form lithium difluorophosphate, which on the one hand reduces the decomposition of lithium hexafluorophosphate and the formation of HF, and on the other hand helps to further stabilize the positive interface film and/or negative interface film and reduce the positive interface impedance and/or negative interface impedance, thus helping to further improve the power performance, storage performance and safety performance of the secondary battery.

In some embodiments, the mass content of the moisture scavenger is below 2%, optionally from 0.05% to 1%, more optionally from 0.1% to 1%, based on the total mass of the non-aqueous electrolyte.

The non-aqueous electrolyte of the present application can be prepared according to methods conventional in the art. For example, the organic solvent(s), the lithium salt(s), the additive(s) and the like can be mixed well to obtain a non-aqueous electrolyte. The order of addition of each material is not particularly limited; for example, the lithium salts and the additive, can be added to the non-aqueous solvent and mixed well to obtain the non-aqueous electrolyte.

In the present application, the components of the non-aqueous electrolyte and the contents thereof can be determined according to methods known in the art. For example, they can be determined by gas chromatography-mass spectrometry (GC-MS), ion chromatography (IC), liquid chromatography (LC), nuclear magnetic resonance spectroscopy (NMR), etc.

It should be noted that when testing the non-aqueous electrolyte of the present application, the non-aqueous electrolyte can be obtained from the secondary battery. An exemplary method of obtaining non-aqueous electrolyte from a secondary battery includes the following steps: discharging the secondary battery to the discharge cut-off voltage (generally leaving the battery in a full discharge state for safety reasons) and then centrifuging it, after which an appropriate amount of the liquid obtained by centrifugation is the non-aqueous electrolyte. The non-aqueous electrolyte can also be obtained directly from the liquid injection port of the secondary battery.

The positive active material layer comprises a positive active material, and the positive active material known in the art for secondary batteries can be used. For example, the positive active material may comprise at least one of a lithium transition metal oxide, a lithium-containing phosphate with olivine structure, and respective modified compounds thereof. Examples of lithium transition metal oxides may include at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their respective modified compounds. Examples of lithium-containing phosphates with olivine structures may include at least one of lithium iron phosphate, composite of lithium iron phosphate with carbon, lithium manganese phosphate, composite of lithium manganese phosphate with carbon, lithium manganese iron phosphate, composite of lithium manganese iron phosphate with carbon, and their respective modified compounds. The present application is not limited to these materials, but may use other conventionally known materials that can be used as positive active materials for secondary batteries. These positive active materials may be used as alone or in combination of two or more.

In some embodiments, the positive active material comprises a layered material with a molecular formula of LiₐNi_{b}Co_{c}Mn_{d}AlₑM_{f}O_{g}Aₕ, in which M represents a cation doped at transition metal site, A represents an anion doped at oxygen site, 0.8≤a≤1.2, 0≤b≤1, 0≤c≤1, 0≤d≤1, 0≤e≤1, 0≤f≤0.2 0≤g≤2, 0≤h≤2, b + c + d + e +f = 1, g +h = 2.

The layered material with the molecular formula of LiₐNi_{b}Co_{c}MnₐAlₑM_{f}O_{g}Aₕ can optionally be modified by M cation doping, modified by A anion doping or modified by both M cation and A anion doping, and the crystal structure of the layered material obtained after doping is more stable, the lattice oxygen is not easily precipitated and the transition metal ions are not easily removed, which can reduce a series of side reactions, thus it can further enhance the safety performance and electrochemical performance of the secondary battery, such as cycle performance, kinetic performance, etc.

In some embodiments, M is selected from at least one of Si, Ti, Mo, V, Ge, Se, Zr, Nb, Ru, Pd, Sb, Ce, Te, and W.

In some embodiments, A is selected from at least one of F, N, P, and S. Optionally, A is selected from F. After modification by F doping, the crystal structure of LiₐNi_{b}Co_{c}MnₐAlₑM_{f}O_{g}Aₕ is more stable, the lattice oxygen is not easily precipitated and the transition metal ions are not easily removed, thereby enabling the secondary battery to have better safety performance, cycle performance and kinetic performance.

The values of a, b, c, d, e, f, g, and h satisfy the condition that LiₐNi_{b}Co_{c}Mn_{d}AlₑM_{f}O_{g}Aₕ remains electrically neutral.

In some embodiments, 0 < b < 0.98. Optionally, 0.50 ≤ b < 0.98, 0.55 ≤ b < 0.98, 0.60 ≤ b < 0.98, 0.65 ≤ b < 0.98, 0.70 ≤ b < 0.98, 0.75 ≤ b < 0.98, or 0.80 ≤ b < 0.98.

In some embodiments, c = 0.

In some embodiments, 0 < c ≤ 0.20. Optionally, 0 < c ≤ 0.15, 0 < c ≤ 0.10, 0 < c ≤ 0.09, 0 < c ≤ 0.08, 0 < c ≤ 0.07, 0 < c ≤ 0.06, 0 < c ≤ 0.05, 0 < c ≤ 0.04, 0 < c ≤ 0.03, 0 < c ≤ 0.02, or 0 < c ≤ 0.01. Cobalt is less abundant in the earth's crust, difficult to mine and expensive, so low cobalt or no cobalt has become an inevitable development trend for positive active materials. However, cobalt contributes greatly to the lithium ion diffusion rate of positive active materials, and low cobalt or no cobalt will reduce the lithium ion diffusion rate of positive active materials and affect the cycle performance of secondary batteries. Researchers have been working to enhance the lithium ion diffusion rate of low-cobalt or cobalt-free positive active materials, but there is no good solution yet.

The inventors of the present application unexpectedly discovered in the course of their research that the B atom in the structure of the compound shown in Formula 1 readily binds to the O atom in the positive active material, reducing the charge transfer impedance of the positive active material and thereby reducing the diffusion resistance of lithium ions within the bulk phase of the positive active material. Therefore, the low-cobalt or cobalt-free positive active material can have a significantly improved lithium ion diffusion rate, and the lithium ions in the bulk phase of the low-cobalt or cobalt-free positive active material can be replenished to the surface in a timely manner to prevent the surface of the low-cobalt or cobalt-free positive active material from over-delithiation, thus stabilizing the crystal structure of the low-cobalt or cobalt-free positive active material. Since the crystal structure of the low-cobalt or cobalt-free positive active material according to the present application is more stable, the probability of the occurrence of problems such as structural properties, chemical properties or electrochemical properties of the positive active material becoming unstable due to excessive lithium removal from the surface of the low-cobalt or cobalt-free positive active material, for example, irreversible distortion and increase in lattice defects of the positive active material, is greatly reduced.

In some embodiments, d = 0 and 0 < e < 0.50. Optionally, d = 0 and 0 < e ≤ 0.45, d = 0 and 0 < e ≤ 0.40, d = 0 and 0 < e ≤ 0.35, d = 0 and 0 < e ≤ 0.30, d = 0 and 0 < e ≤ 0.25, d = 0 and 0 < e ≤ 0.20, d = 0 and 0 < e ≤ 0.15, or d = 0 and 0 < e ≤ 0.10.

In some embodiments, e = 0 and 0 < d < 0.50. Optionally, e = 0 and 0 < d ≤ 0.45, e = 0 and 0 < d ≤ 0.40, e = 0 and 0 < d ≤ 0.35, e = 0 and 0 < d ≤ 0.30, e = 0 and 0 < d ≤ 0.25, e = 0 and 0 < d ≤ 0.20, e = 0 and 0 < d ≤ 0.15, or e = 0 and 0 < d ≤ 0.10.

In some embodiments, 0 < d < 0.50 and 0 < e < 0.50. Optionally, 0 < d ≤ 0.30 and 0 < e ≤ 0.10.

In some embodiments, g = 2 and h = 0.

In some embodiments, g = 0 and h = 2.

In some embodiments, 0 < g < 2, 0 < h < 2, and g + h = 2.

As examples, layered materials with the molecular formula of LiₐNi_{b}Co_{c}MnₐAlₑM_{f}O_{g}Aₕ include, but are not limited to, at least one of LiNi_{0.7}Mn_{0.3}O₂, LiNi_{0.69}Co_{0.01}Mn_{0.3}O₂, LiNi_{0.68}Co_{0.02}Mn_{0.3}O₂, LiNi_{0.65}Co_{0.05}Mn_{0.3}O₂, LiNi_{0.63}Co_{0.07}Mn_{0.3}O₂, LiNi_{0.61}Co_{0.09}Mn_{0.3}O₂.

LiₐNi_{b}Co_{c}MnₐAlₑM_{f}O_{g}Aₕ can be prepared according to conventional methods in the art. Exemplary preparation methods are as follows: a lithium source, a nickel source, a cobalt source, a manganese source, an aluminum source, an M-element precursor, and an A-element precursor are mixed and sintered. The sintering atmosphere may be an oxygen-containing atmosphere, for example, an air atmosphere or an oxygen atmosphere. The O₂ concentration of the sintering atmosphere is, for example, from 70% to 100%. The sintering temperature and sintering time can be adjusted according to the actual situation.

As an example, the lithium source includes, but is not limited to, at least one of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the element M precursor includes, but is not limited to, at least one of an oxide of the element M, a nitrate compound of the element M, a carbonate compound of the element M, a hydroxide compound of the element M, and an acetate compound of the element M. As an example, the precursors of element A include, but are not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium hydrogen sulfide, hydrogen sulfide, lithium sulfide, ammonium sulfide, and elemental sulfur.

In some embodiments, the content of the layered material with the molecular formula of LiₐNi_{b}Co_{c}MnₐAlₑM_{f}O_{g}Aₕ is from 80% to 99%, based on the total mass of the positive active material layer. For example, the mass content of the layered material with the molecular formula of LiₐNi_{b}Co_{c}MnₐAlₑM_{f}O_{g}Aₕ may be 80%, 81%, 82%, 83%, 84%, 85%, 86%, 87%, 88%, 89%, 90%, 91%, 92%, 93%, 94%, 95%, 96%, 97%, 98%, 99% or any of the above values the range consisting of Optionally, the layered material with the molecular formula of LiₐNi_{b}Co_{c}MnₐAlₑM_{f}O_{g}Aₕ has a content of from 85% to 99%, from 90% to 99%, from 95% to 99%, from 80% to 98%, from 85% to 98%, from 90% to 98%, from 95% to 98%, from 80% to 97%, from 85% to 97%, from 90% to 97%, or from 95% to 97%.

In some embodiments, the positive active material layer may further optionally comprise a conductive agent for positive electrode. The present application does not particularly limit the type of conductive agent for positive electrode, and as an example, the conductive agent for positive electrode includes at least one of superconducting carbon, conductive graphite, acetylene black, carbon black, Ketjen black, carbon dots, carbon nanotubes, graphene, and carbon nanofibers. In some embodiments, the mass content of the conductive agent for positive electrode is below 5%, based on the total mass of the positive active material layer.

In some embodiments, the positive active material layer further optionally comprises a binder for positive electrode. The present application does not particularly limit the type of the binder for positive electrode, and as an example, the binder for positive electrode may include at least one of polyvinylidene fluoride (PVDF), polytetrafluoroethylene (PTFE), vinylidene fluoride-tetrafluoroethylene-propylene terpolymer, vinylidene fluoride-hexafluoropropylene -tetrafluoroethylene terpolymer, vinylidene fluoride-hexafluoropropylene copolymer, and fluorinated acrylate resins. In some embodiments, the mass content of the binder for positive electrode is below 5%, based on the total mass of the positive active material layer.

The positive active material layer is usually formed by applying a positive electrode slurry on a positive electrode collector, drying and cold pressing. The positive electrode slurry is typically formed by dispersing the positive active material, optional conductive agent, optional binder, other optional additives in a solvent and stirring well. The solvent may be N-methylpyrrolidone (NMP) or deionized water, but is not limited thereto.

In the present application, the negative active material layer comprises a negative active material, and the negative active material may be a negative active material known in the art for secondary batteries. As an example, the negative active material includes, but is not limited to, at least one of natural graphite, artificial graphite, soft carbon, hard carbon, silicon-based material, tin-based material, and lithium titanate. The silicon-based material may include at least one of elemental silicon, silicon oxide, silicon-carbon composite, silicon-nitrogen composite, and silicon alloy material. The tin-based materials may include at least one of elemental tin, tin oxide, and tin alloy material. The present application is not limited to these materials, and other conventionally known materials that can be used as negative active materials for secondary batteries may also be used. These negative active materials may be used as just one alone or in combination of two or more.

In some embodiments, the negative active material layer may further optionally include a conductive agent for negative electrode. The present application does not particularly limit the type of the conductive agent for negative electrode and, as an example, the conductive agent for negative electrode may include at least one of superconducting carbon, conductive graphite, acetylene black, carbon black, Ketjen black, carbon dots, carbon nanotubes, graphene, carbon nanofibers. In some embodiments, the mass content of the conductive agent for negative electrode is below 5%, based on the total mass of the negative active material layer.

In some embodiments, the negative active material layer may further optionally comprise a binder for negative electrode. The present application does not particularly limit the type of the binder for negative electrode, and as an example, the binder for negative electrode may include at least one of styrene-butadiene rubber (SBR), water-soluble unsaturated resin SR-1B, aqueous acrylic resins (e.g., polyacrylic acid PAA, polymethacrylic acid PMAA, sodium polyacrylate PAAS), polyacrylamide (PAM), polyvinyl alcohol (PVA), sodium alginate (SA), and carboxymethyl chitosan (CMCS). In some embodiments, the mass content of the binder for negative electrode is below 5%, based on the total mass of the negative active material layer.

In some embodiments, the negative active material layer may optionally further include other additives. As examples, other additives may include thickeners, e.g., sodium carboxymethylcellulose (CMC-Na), PTC thermistor material, etc. In some embodiments, the mass content of the other additives is below 2%, based on the total mass of the negative active material layer.

In some embodiments, the negative electrode collector may be a metal foil or a composite collector. As an example of a metal foil, a copper foil may be used. The composite collector may include a base layer of polymeric material and a layer of metallic material formed on at least one surface of the base layer of polymeric material. As an example, the metal material can be selected from at least one of aluminum, aluminum alloy, nickel, nickel alloy, titanium, titanium alloy, silver, silver alloy. As examples, the polymeric material base layer may be selected from polypropylene (PP), polyethylene terephthalate (PET), polybutylene terephthalate (PBT), polystyrene (PS), polyethylene (PE), and the like.

The negative active material layer is usually formed by applying a negative electrode slurry on a negative electrode collector, drying and cold pressing. The negative electrode slurry is typically formed by dispersing the negative active material, optional conductive agent, optional binder, other optional additives in a solvent and stirring well. The solvent may be N-methylpyrrolidone (NMP) or deionized water, but is not limited thereto.

In the present application, a separator is arranged between the positive electrode plate and the negative electrode plate, which mainly functions as preventing short circuit of the positive and negative electrodes while allowing active ions to pass through. There is no particular limitation on the type of separator in the present application, and any well-known porous-structure separator with good chemical stability and mechanical stability can be selected.

In some embodiments, materials of the separator can be one or more selected from glass fibers, non-woven fabrics, polyethylene, polypropylene and polyvinylidene fluoride. The separator can be a single-layer film or a multi-layer composite film. When the separator is a multi-layer composite film, materials of each layer can be the same or different.

In some embodiments, the outer package of the secondary battery may be a hard case, such as a hard plastic case, an aluminum case, a steel case, and the like. The outer package of the secondary battery may also be a soft package, such as a pouch-type soft package. Material of the soft package can be plastic, such as one or more of polypropylene (PP), polybutylene terephthalate (PBT), and polybutylene succinate (PBS).

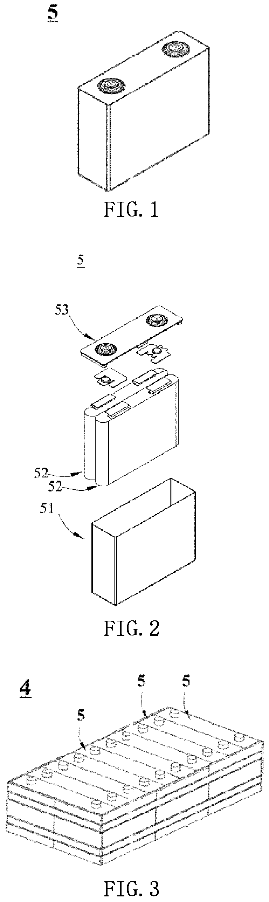

The present application does not have particular limitation to the shape of the secondary battery. The secondary battery may be cylindrical, square, or in other arbitrary shape. Fig. 1 shows a secondary battery 5 with a square structure as an example.

In some embodiments, referring to Fig. 2, the outer package may include a housing 51 and a cover plate 53. The housing 51 may include a bottom plate and side plates connected to the bottom plate, and the bottom plate and the side plates enclose a receiving cavity. The housing 51 has an opening communicated with the receiving cavity, and the cover plate 53 can cover the opening to close the receiving cavity. The positive electrode plate, the negative electrode plate and the separator may be wound or laminated to form an electrode assembly 52, which is encapsulated in the receiving cavity. A non-aqueous electrolyte is infiltrated into the electrode assembly 52. The number of electrode assemblies 52 contained in the secondary battery 5 may be one or more, which may be adjusted according to the demand.

The method for preparing the secondary battery of the present application is well known. In some embodiments, a positive electrode plate, a separator, a negative electrode plate, and a non-aqueous electrolyte may be assembled to form a secondary battery. As an example, the positive electrode plate, the separator, and the negative electrode plate can be formed into an electrode assembly by a winding process or a laminating process; the battery assembly is placed in an outer package, into which the non-aqueous electrolyte is injected after it is dried. After that, the processes of vacuum packing, steady standing, formation, and shaping are carried out, thereby obtaining a secondary battery.

In some embodiments of the present application, the secondary battery according to the present application can be assembled into battery modules, and the number of secondary battery contained in the battery modules can be multiple, and the specific number can be adjusted according to the application and capacity of the battery modules.

Fig. 3 is a schematic diagram of a battery module 4 as an example. As shown in Fig. 3, in the battery module 4, the plurality of secondary batteries 5 may be provided sequentially along the length of the battery module 4. Of course, they can also be arranged in any other way. Further the plurality of secondary batteries 5 can be secured by fasteners.

Optionally, the battery module 4 may further include a housing with a receiving space, and the plurality of secondary batteries 5 are received in the receiving space.

In some embodiments, the above-mentioned battery module may also be assembled into a battery pack, and the number of battery modules included in the battery pack may be adjusted according to the application and capacity of the battery pack.

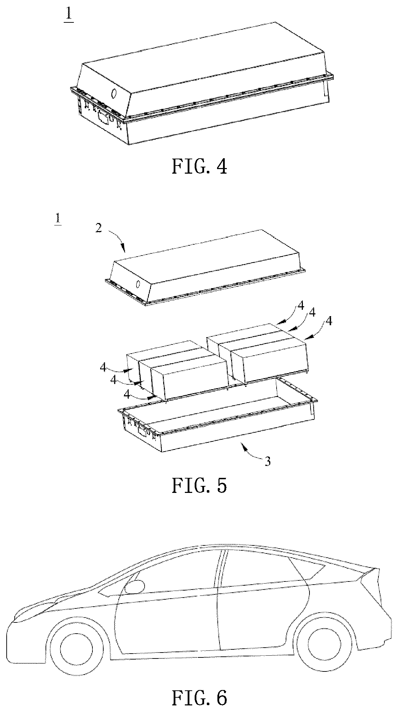

Figs. 4 and 5 show a battery pack 1 as an example. Referring to Figs. 4 and 5, the battery pack 1 may include a battery case and a plurality of battery modules 4 disposed in the battery case. The battery case includes an upper case body 2 and a lower case body 3. The upper case body 2 may cover the lower case body 3 to form a closed space for receiving the battery modules 4. The plurality of battery modules 4 may be arranged in the battery case in any manner.

Embodiments of the present application further provide an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can select a secondary battery, a battery module or a battery pack according to its usage requirements.

Fig. 6 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

The secondary batteries of each Example and Comparative Example were prepared according to the following method.

### Preparation of positive electrode plate

The positive active material LiNi_{0.65}Co_{0.05}Mn_{0.3}O₂, the conductive agent carbon black (Super P), and the binder polyvinylidene fluoride (PVDF) were mixed in an appropriate amount of solvent NMP with thorough stirring at a mass ratio of 97.5:1.4:1 to form a uniform positive electrode slurry; the positive electrode slurry was uniformly applied on the surface of the positive electrode collector aluminum foil, and after being dried and cold pressed, the positive electrode plate was obtained. The specific ranges of the thickness H µm and the elongation at break Q% of the positive electrode collector, and the compaction density P g/cm³ of the positive active material layer were shown in Tables 1 and 3, respectively.

### Preparation of negative electrode plate

The negative active material graphite, the binder butadiene rubber (SBR), the thickener sodium carboxymethyl cellulose (CMC-Na), and the conductive agent carbon black (Super P) were mixed in an appropriate amount of deionized water as solvent with thorough stirring at a mass ratio of 96.2:1.8:1.2:0.8 to form a uniform negative electrode slurry; the negative electrode slurry was evenly applied on the surface of the negative electrode collector copper foil. After being dried and cold pressed, the negative electrode plate was obtained.

### Separator

A porous polyethylene (PE) film was used as the separator.

### Preparation of non-aqueous electrolyte

The cyclic carbonate compound, the chain carbonate compound and the carboxylic ester compound were mixed well according to the composition shown in Table 1 to obtain the organic solvent, after which the compound shown in Formula 1, fluoroethylene carbonate (FEC), lithium hexafluorophosphate (LiPF₆) and lithium bis(fluorosulfonyl)imide (LiFSI) were added to the organic solvent and mixed well according to the composition shown in Table 1 and Table 3 to obtain the non-aqueous electrolyte. In Table 1 and Table 3, the content of each component was based on the total mass of the non-aqueous electrolyte, and "/" indicates that the corresponding component was not added.

### Preparation of secondary battery

The positive electrode plate, the separator, the negative electrode plate as prepared above were stacked and wound in order to obtain an electrode assembly; the electrode assembly was put into an outer package, after being dried, the above-mentioned electrolyte was added. Through vacuum encapsulation, standing, formation, and shaping process, the secondary battery was obtained.

### Test section

### (1) Test for mass energy density of secondary battery

At 25°C, the secondary battery was charged to 4.25V with a constant current of 0.33C, and continued to charge at constant voltage until the current was 0.05C; after standing for 5min, the secondary battery was discharged to 2.8V with a constant current of 0.33C, and then the discharge energy was obtained. The mass energy density of the secondary battery (Wh/Kg) = discharge energy / mass of the secondary battery.

### (2) Test Secondary battery power performance test

At 25°C, the secondary battery was charged to 4.25V with a constant current of 0.1C, and continued to charge at constant voltage until the current was 0.05C, at which time the secondary battery was fully charged; the secondary battery was discharged with a constant current of 1C for about 30 minutes and the charge state of the secondary battery was adjusted to 50% SOC, at which time the voltage of the secondary battery was recorded as V₀; then the secondary battery was discharged with a current I₁ of 4C for 30, using a sampling interval time of 0.1 second, and the voltage at the end of discharge was recorded as V₁. The internal resistance of the secondary battery DCR=(V₀-V₁)/I₁. The smaller the internal resistance of the secondary battery was, the better the power performance was.

### (3) Test for hot box safety performance of secondary battery

At 25°C, the secondary battery was charged to 4.25V with a constant current of 1C, and continued to charge at constant voltage until the current was 0.05C, at which time the secondary battery was fully charged; the fully charged secondary battery was placed in a well-sealed high-temperature chamber, and was heated to 100°C at 5°C/min, held for 1 hour, and then heated to 105°C at 5°C/min, held for 30 minutes, until the secondary battery failed. The highest temperature Tₘₐₓ before the secondary battery failed was recorded. The higher the Tₘₐₓ was, the better the hot box safety performance of the secondary battery was.

(4) Test for cycle performance of secondary battery at room temperature

At 45°C, the secondary battery was charged to 4.25V with a constant current of 1C, continued to charge at constant voltage until the current was 0.05C. At this time, the secondary battery was in a fully charged state, at which time the charge capacity was recorded, i.e. the charge capacity of the first cycle. After the secondary battery was allowed for standing for 5min, it was discharged to 2.8V with a constant current of 1C. This was a cyclic charge-discharge process, at which time the discharge capacity was recorded, i.e. the discharge capacity of the first cycle. The secondary battery was subjected to the above cyclic charge-discharge process, and the discharge capacity after each cycle was recorded. Capacity retention rate of secondary battery at 45°C after 600 cycles (%) = discharge capacity after 600 cycles/discharge capacity after the 1^{st} cycle× 100%.

(5) Test for storage performance of secondary battery

At 60°C, the secondary battery was charged to 4.25V with a constant current of 1C, and continued to charge at constant voltage until the current was 0.05C, at which time the volume of the secondary battery was tested by the drainage method and recorded as V₀. The secondary battery was placed in a thermostat at 60°C and stored for 30 days and then removed, at which time the volume of the secondary battery was tested by the drainage method and recorded as V₁. The volume expansion rate of the secondary battery after 30 days of storage at 60°C (%) = [(V₁-V₀)/V₀] × 100%.

Table 1 shown the parameters for the positive electrode plate and the non-aqueous electrolyte of Examples 1-1 to 1-33 and Comparative Examples 1-1 to 1-4. Table 2 shown the test results obtained for Examples 1-1 to 1-33 and Comparative Examples 1-1 to 1-4 according to the performance test described above.

Table 3 shown the parameters for the positive electrode plate and the non-aqueous electrolyte of Examples 2-1 to 2-32 and Comparative Examples 2-1 to 2-3. Table 4 shown the test results obtained for Examples 2-1 to 2-32 and Comparative Examples 2-1 to 2-3 according to the performance test described above.

**Table 1**

| No. | Positive electrode collector | | Positive active material layer P (g/cm³) | Compound shown in Formula 1 | | First lithium salt | | Cyclic carbonate compound | | Chain carbonate compound | | Carboxylic ester compound | | FEC |
|---|---|---|---|---|---|---|---|---|---|---|---|---|---|---|
| | Thickness H (µm) | Elongation at break Q(%) | | Type | ContentA1(%) | LiPF₆ ContentA2(%) | LiFSI ContentA3 (%) | Type | Content B1(%) | Type | Content B2(%) | Type | Content B3(%) | Content Cl (%) |
| Comparative Example 1-1 | 12 | 2.5 | 3.5 | / | / | 12.5 | / | EC | 18 | EMC | 64.5 | EA | 5 | / |
| Comparative Example 1-2 | 12 | 2.5 | 3.5 | H4 | 0.01 | 12.5 | / | EC | 18 | EMC | 64 | EA | 5 | 0.5 |
| Comparative Example 1-3 | 12 | 2.5 | 3.5 | H4 | 1.8 | 10.7 | / | EC | 18 | EMC | 64 | EA | 5 | 0.5 |
| Comparative Example 1-4 | 12 | 2.5 | 3.5 | H4 | 2.5 | 10 | / | EC | 18 | EMC | 64 | EA | 5 | 0.5 |
| Example 1-1 | 12 | 2.5 | 3.5 | H4 | 0.018 | 12.5 | / | EC | 18 | EMC | 64 | EA | 5 | 0.5 |
| Example 1-2 | 12 | 2.5 | 3.5 | H4 | 0.02 | 12.5 | / | EC | 18 | EMC | 64 | EA | 5 | 0.5 |
| Example 1-3 | 12 | 2.5 | 3.5 | H4 | 0.1 | 12.4 | / | EC | 18 | EMC | 64 | EA | 5 | 0.5 |
| Example 1-4 | 12 | 2.5 | 3.5 | H4 | 0.2 | 12.3 | / | EC | 18 | EMC | 64 | EA | 5 | 0.5 |
| Example 1-5 | 12 | 2.5 | 3.5 | H4 | 0.3 | 12.2 | / | EC | 18 | EMC | 64 | EA | 5 | 0.5 |
| Example 1-6 | 12 | 2.5 | 3.5 | H4 | 0.4 | 12.1 | / | EC | 18 | EMC | 64 | EA | 5 | 0.5 |
| Example 1-7 | 12 | 2.5 | 3.5 | H4 | 0.5 | 12 | / | EC | 18 | EMC | 64 | EA | 5 | 0.5 |
| Example 1-8 | 12 | 2.5 | 3.5 | H4 | 0.8 | 11.7 | / | EC | 18 | EMC | 64 | EA | 5 | 0.5 |
| Example 1-9 | 12 | 2.5 | 3.5 | H4 | 1 | 11.5 | / | EC | 18 | EMC | 64 | EA | 5 | 0.5 |
| Example 1-10 | 12 | 2.5 | 3.5 | H4 | 1.5 | 11 | / | EC | 18 | EMC | 64 | EA | 5 | 0.5 |
| Example 1-11 | 12 | 2.5 | 3.5 | H1 | 0.2 | 12 | 0.3 | EC | 18 | EMC | 69 | / | / | 0.5 |
| Example 1-12 | 12 | 2.5 | 3.5 | H1 | 0.2 | 11.5 | 0.8 | EC | 18 | EMC | 69 | / | / | 0.5 |
| Example 1-13 | 12 | 2.5 | 3.5 | H1 | 0.2 | 11 | 1.3 | EC | 18 | EMC | 69 | / | / | 0.5 |
| Example 1-14 | 12 | 2.5 | 3.5 | H1 | 0.2 | 10 | 2.3 | EC | 18 | EMC | 69 | / | / | 0.5 |
| Example 1-15 | 12 | 2.5 | 3.5 | H1 | 0.2 | 8 | 4.3 | EC | 18 | EMC | 69 | / | / | 0.5 |
| Example 1-16 | 12 | 1.5 | 3.5 | H4 | 0.2 | 11 | 1.3 | EC | 18 | EMC | 64 | EA | 5 | 0.5 |
| Example 1-17 | 12 | 2 | 3.5 | H4 | 0.2 | 11 | 1.3 | EC | 18 | EMC | 64 | EA | 5 | 0.5 |
| Example 1-18 | 12 | 3 | 3.5 | H4 | 0.2 | 11 | 1.3 | EC | 18 | EMC | 64 | EA | 5 | 0.5 |
| Example 1-19 | 12 | 3.5 | 3.5 | H4 | 0.2 | 11 | 1.3 | EC | 18 | EMC | 64 | EA | 5 | 0.5 |
| Example 1-20 | 12 | 2.5 | 3.2 | H4 | 0.2 | 11 | 1.3 | EC | 18 | EMC | 64 | EA | 5 | 0.5 |
| Example 1-21 | 12 | 2.5 | 3.3 | H4 | 0.2 | 11 | 1.3 | EC | 18 | EMC | 64 | EA | 5 | 0.5 |
| Example 1-22 | 12 | 2.5 | 3.4 | H4 | 0.2 | 11 | 1.3 | EC | 18 | EMC | 64 | EA | 5 | 0.5 |
| Example 1-23 | 12 | 2.5 | 3.6 | H4 | 0.2 | 11 | 1.3 | EC | 18 | EMC | 64 | EA | 5 | 0.5 |
| Example 1-24 | 12 | 2.5 | 3.7 | H4 | 0.2 | 11 | 1.3 | EC | 18 | EMC | 64 | EA | 5 | 0.5 |
| Example 1-25 | 12 | 2.5 | 3.5 | H4 | 0.2 | 11 | 1.3 | EC | 18 | EMC | 64.4 | EA | 5 | 0.1 |
| Example 1-26 | 12 | 2.5 | 3.5 | H4 | 0.2 | 11 | 1.3 | EC | 18 | EMC | 64.3 | EA | 5 | 0.2 |
| Example 1-27 | 12 | 2.5 | 3.5 | H4 | 0.2 | 11 | 1.3 | EC | 18 | EMC | 63.5 | EA | 5 | 1 |
| Example 1-28 | 12 | 2.5 | 3.5 | H4 | 0.2 | 11 | 1.3 | EC | 18 | EMC | 63 | EA | 5 | 1.5 |
| Example 1-29 | 12 | 2.5 | 3.5 | H4 | 0.2 | 11 | 1.3 | EC | 12 | EMC | 70 | EA | 5 | 0.5 |
| Example 1-30 | 12 | 2.5 | 3.5 | H4 | 0.2 | 11 | 1.3 | EC | 15 | EMC | 67 | EA | 5 | 0.5 |
| Example 1-31 | 12 | 2.5 | 3.5 | H4 | 0.2 | 11 | 1.3 | EC | 18 | EMC | 64 | EA | 5 | 0.5 |
| Example 1-32 | 12 | 2.5 | 3.5 | H4 | 0.2 | 11 | 1.3 | EC | 20 | EMC | 62 | EA | 5 | 0.5 |
| Example 1-33 | 12 | 2.5 | 3.5 | H4 | 0.2 | 11 | 1.3 | EC | 25 | EMC | 57 | EA | 5 | 0.5 |

**Table 2**

| No. | A1/H | P/A1 | Q+A1 | A2/A1 | B1/20+A1 | C1/A1 | Energy density (Wh/Kg) | DCR(mΩ) | Tₘₐₓ(°C) | Capacity retention rate of secondary battery at 45°C after 600 cycles | Volume expansion rate of the secondary battery after 30 days of storage at 60°C |
|---|---|---|---|---|---|---|---|---|---|---|---|
| Comparative Example 1-1 | / | / | / | / | / | / | 270.0 | 22.3 | 140 | 65.3% | 15.6% |
| Comparative Example 1-2 | 0.0008 | 350.0 | 2.51 | 1250 | 0.9 | 50.0 | 270.0 | 21.4 | 140 | 66.9% | 15.4% |
| Comparative Example 1-3 | 0.150 | 1.9 | 4.30 | 5.9 | 2.7 | 0.3 | 272.3 | 23.9 | 135 | 67.5% | 16.7% |
| Comparative Example 1-4 | 0.208 | 1.4 | 5.00 | 4.0 | 3.4 | 0.2 | 273.0 | 24.1 | 130 | 64.7% | 16.9% |
| Example 1-1 | 0.0015 | 194.4 | 2.52 | 694.4 | 0.9 | 27.8 | 270.0 | 18.3 | 145 | 79.9% | 12.1% |
| Example 1-2 | 0.0017 | 175.0 | 2.52 | 625.0 | 0.9 | 25.0 | 270.0 | 18.1 | 145 | 80.5% | 11.6% |
| Example 1-3 | 0.0083 | 35.0 | 2.60 | 124.0 | 1.0 | 5.0 | 270.1 | 17.6 | 150 | 81.4% | 11.1% |
| Example 1-4 | 0.017 | 17.5 | 2.70 | 61.5 | 1.1 | 2.5 | 270.2 | 17.2 | 150 | 81.9% | 10.6% |
| Example 1-5 | 0.025 | 11.7 | 2.80 | 40.7 | 1.2 | 1.7 | 270.3 | 16.4 | 150 | 82.5% | 10.1% |
| Example 1-6 | 0.033 | 8.8 | 2.90 | 30.3 | 1.3 | 1.3 | 270.4 | 16.8 | 145 | 81.3% | 10.4% |
| Example 1-7 | 0.042 | 7.0 | 3.00 | 24.0 | 1.4 | 1.0 | 270.5 | 17.1 | 145 | 80.6% | 10.8% |
| Example 1-8 | 0.067 | 4.4 | 3.30 | 14.6 | 1.7 | 0.6 | 270.8 | 17.4 | 145 | 79.5% | 11.1% |
| Example 1-9 | 0.083 | 3.5 | 3.50 | 11.5 | 1.9 | 0.5 | 271.0 | 17.9 | 140 | 79.1% | 11.3% |
| Example 1-10 | 0.125 | 2.3 | 4.00 | 7.3 | 2.4 | 0.3 | 271.5 | 18.5 | 140 | 78.3% | 11.9% |
| Example 1-11 | 0.017 | 17.5 | 2.70 | 60.0 | 1.1 | 2.5 | 270.2 | 18.7 | 150 | 79.9% | 12.5% |
| Example 1-12 | 0.017 | 17.5 | 2.70 | 57.5 | 1.1 | 2.5 | 270.2 | 18.3 | 150 | 80.8% | 11.6% |
| Example 1-13 | 0.017 | 17.5 | 2.70 | 55.0 | 1.1 | 2.5 | 270.2 | 17.3 | 150 | 81.5% | 10.9% |
| Example 1-14 | 0.017 | 17.5 | 2.70 | 50.0 | 1.1 | 2.5 | 270.2 | 17.8 | 150 | 80.0% | 11.4% |
| Example 1-15 | 0.017 | 17.5 | 2.70 | 40.0 | 1.1 | 2.5 | 270.2 | 18.4 | 150 | 78.3% | 11.9% |
| Example 1-16 | 0.017 | 17.5 | 1.70 | 55.0 | 1.1 | 2.5 | 270.2 | 18.1 | 150 | 80.1% | 11.5% |
| Example 1-17 | 0.017 | 17.5 | 2.20 | 55.0 | 1.1 | 2.5 | 270.2 | 17.5 | 150 | 80.5% | 10.9% |
| Example 1-18 | 0.017 | 17.5 | 3.20 | 55.0 | 1.1 | 2.5 | 270.2 | 16.8 | 155 | 81.5% | 11.9% |
| Example 1-19 | 0.017 | 17.5 | 3.70 | 55.0 | 1.1 | 2.5 | 270.2 | 17.6 | 160 | 80.4% | 12.2% |
| Example 1-20 | 0.017 | 16.0 | 2.70 | 55.0 | 1.1 | 2.5 | 255.2 | 14.6 | 155 | 82.4% | 10.3% |
| Example 1-21 | 0.017 | 16.5 | 2.70 | 55.0 | 1.1 | 2.5 | 260.2 | 15.1 | 155 | 81.9% | 10.9% |
| Example 1-22 | 0.017 | 17.0 | 2.70 | 55.0 | 1.1 | 2.5 | 265.2 | 16.4 | 155 | 81.5% | 11.1% |
| Example 1-23 | 0.017 | 18.0 | 2.70 | 55.0 | 1.1 | 2.5 | 275.2 | 17.5 | 155 | 79.5% | 12.1% |
| Example 1-24 | 0.017 | 18.5 | 2.70 | 55.0 | 1.1 | 2.5 | 280.2 | 17.9 | 155 | 77.5% | 13.2% |
| Example 1-25 | 0.017 | 17.5 | 2.70 | 55.0 | 1.1 | 0.5 | 270.2 | 16.4 | 155 | 80.0% | 10.4% |
| Example 1-26 | 0.017 | 17.5 | 2.70 | 55.0 | 1.1 | 1.0 | 270.2 | 16.9 | 155 | 80.5% | 10.7% |
| Example 1-27 | 0.017 | 17.5 | 2.70 | 55.0 | 1.1 | 5.0 | 270.2 | 17.6 | 155 | 81.7% | 11.9% |
| Example 1-28 | 0.017 | 17.5 | 2.70 | 55.0 | 1.1 | 7.5 | 270.2 | 18.7 | 155 | 81.0% | 12.7% |
| Example 1-29 | 0.017 | 17.5 | 2.70 | 55.0 | 0.8 | 2.5 | 270.2 | 17.8 | 155 | 80.6% | 10.3% |
| Example 1-30 | 0.017 | 17.5 | 2.70 | 55.0 | 1.0 | 2.5 | 270.2 | 17.4 | 155 | 80.9% | 10.9% |
| Example 1-31 | 0.017 | 17.5 | 2.70 | 55.0 | 1.1 | 2.5 | 270.2 | 17.2 | 155 | 80.8% | 11.4% |
| Example 1-32 | 0.017 | 17.5 | 2.70 | 55.0 | 1.2 | 2.5 | 270.2 | 17.0 | 155 | 80.8% | 11.9% |
| Example 1-33 | 0.017 | 17.5 | 2.70 | 55.0 | 1.5 | 2.5 | 270.2 | 16.9 | 155 | 80.1% | 12.6% |

**Table 3**

| No. | Positive electrode collector | | Positive active material layer P (g/cm³) | Compound shown in Formula 1 | | First lithium salt | | Cyclic carbonate compound | | Chain carbonate compound | | Carboxylic ester compound | | FEC |
|---|---|---|---|---|---|---|---|---|---|---|---|---|---|---|
| | Thickne ss H (µm) | Elongatio n at break Q(%) | | Type | ContentAl (%) | LiPF₆ ContentA2( %) | LiFSI ContentA3 (%) | Type | | Thickness H (µm) | Elongat ion at break Q(%) | | Type | ContentA1( %) |
| Comparative Example 2-1 Example | 9 | 2.2 | 3.3 | / | / | 12.5 | / | EC | 18 | EMC | 64.5 | EA | 5 | / |
| Comparative Example 2-2 Example | 9 | 2.2 | 3.3 | H4 | 0.01 | 12.5 | / | EC | 18 | EMC | 64 | EA | 5 | 0.5 |
| Comparative Example 2-3 | 9 | 2.2 | 3.3 | H4 | 2 | 10.5 | / | EC | 18 | EMC | 64 | EA | 5 | 0.5 |
| Example 2-1 | 9 | 2.2 | 3.3 | H4 | 0.05 | 12.5 | / | EC | 18 | EMC | 64 | EA | 5 | 0.5 |
| Example 2-2 | 9 | 2.2 | 3.3 | H4 | 0.1 | 12.4 | / | EC | 18 | EMC | 64 | EA | 5 | 0.5 |
| Example 2-3 | 9 | 2.2 | 3.3 | H4 | 0.2 | 12.3 | / | EC | 18 | EMC | 64 | EA | 5 | 0.5 |
| Example 2-4 | 9 | 2.2 | 3.3 | H4 | 0.3 | 12.2 | / | EC | 18 | EMC | 64 | EA | 5 | 0.5 |
| Example 2-5 | 9 | 2.2 | 3.3 | H4 | 0.4 | 12.1 | / | EC | 18 | EMC | 64 | EA | 5 | 0.5 |
| Example 2-6 | 9 | 2.2 | 3.3 | H4 | 0.5 | 12 | / | EC | 18 | EMC | 64 | EA | 5 | 0.5 |
| Example 2-7 | 9 | 2.2 | 3.3 | H4 | 0.8 | 11.7 | / | EC | 18 | EMC | 64 | EA | 5 | 0.5 |
| Example 2-8 | 9 | 2.2 | 3.3 | H4 | 1 | 11.5 | / | EC | 18 | EMC | 64 | EA | 5 | 0.5 |
| Example 2-9 | 9 | 2.2 | 3.3 | H4 | 1.4 | 11.1 | / | EC | 18 | EMC | 64 | EA | 5 | 0.5 |
| Example 2-10 | 9 | 2.2 | 3.3 | H2 | 0.4 | 12 | 0.1 | EC | 18 | EMC | 64 | EA | 5 | 0.5 |
| Example 2-11 | 9 | 2.2 | 3.3 | H2 | 0.4 | 11.5 | 0.6 | EC | 18 | EMC | 64 | EA | 5 | 0.5 |
| Example 2-12 | 9 | 2.2 | 3.3 | H2 | 0.4 | 11 | 1.1 | EC | 18 | EMC | 64 | EA | 5 | 0.5 |
| Example 2-13 | 9 | 2.2 | 3.3 | H2 | 0.4 | 10 | 2.1 | EC | 18 | EMC | 64 | EA | 5 | 0.5 |
| Example 2-14 | 9 | 2.2 | 3.3 | H2 | 0.4 | 8 | 4.1 | EC | 18 | EMC | 64 | EA | 5 | 0.5 |
| Example 2-15 | 9 | 1.5 | 3.3 | H4 | 0.4 | 11 | 1.1 | EC | 18 | EMC | 64 | EA | 5 | 0.5 |
| Example 2-16 | 9 | 2 | 3.3 | H4 | 0.4 | 11 | 1.1 | EC | 18 | EMC | 64 | EA | 5 | 0.5 |
| Example 2-17 | 9 | 3 | 3.3 | H4 | 0.4 | 11 | 1.1 | EC | 18 | EMC | 64 | EA | 5 | 0.5 |
| Example 2-18 | 9 | 3.5 | 3.3 | H4 | 0.4 | 11 | 1.1 | EC | 18 | EMC | 64 | EA | 5 | 0.5 |
| Example 2-19 | 9 | 2.2 | 3.2 | H4 | 0.4 | 11 | 1.5 | EC | 18 | EMC | 64 | EA | 5 | 0.5 |
| Example 2-20 | 9 | 2.2 | 3.4 | H4 | 0.4 | 11 | 1.5 | EC | 18 | EMC | 64 | EA | 5 | 0.5 |
| Example 2-21 | 9 | 2.2 | 3.5 | H4 | 0.4 | 11 | 1.5 | EC | 18 | EMC | 64 | EA | 5 | 0.5 |
| Example 2-22 | 9 | 2.2 | 3.6 | H4 | 0.4 | 11 | 1.5 | EC | 18 | EMC | 64 | EA | 5 | 0.5 |
| Example 2-23 | 9 | 2.2 | 3.7 | H4 | 0.4 | 11 | 1.5 | EC | 18 | EMC | 64 | EA | 5 | 0.5 |
| Example 2-24 | 9 | 2.2 | 3.3 | H4 | 0.4 | 11 | 1.3 | EC | 18 | EMC | 64.4 | EA | 5 | 0.1 |
| Example 2-25 | 9 | 2.2 | 3.3 | H4 | 0.4 | 11 | 1.3 | EC | 18 | EMC | 64.3 | EA | 5 | 0.2 |
| Example 2-26 | 9 | 2.2 | 3.3 | H4 | 0.4 | 11 | 1.3 | EC | 18 | EMC | 63.5 | EA | 5 | 1 |
| Example 2-27 | 9 | 2.2 | 3.3 | H4 | 0.4 | 11 | 1.3 | EC | 18 | EMC | 63 | EA | 5 | 1.5 |
| Example 2-28 | 9 | 2.2 | 3.3 | H4 | 0.4 | 11 | 1.3 | EC | 18 | EMC | 62 | EA | 5 | 2.5 |
| Example 2-29 | 9 | 2.2 | 3.3 | H4 | 0.4 | 11 | 1.1 | EC | 10 | EMC | 77 | / | / | 0.5 |
| Example 2-30 | 9 | 2.2 | 3.3 | H4 | 0.4 | 11 | 1.1 | EC | 15 | EMC | 72 | / | / | 0.5 |
| Example 2-31 | 9 | 2.2 | 3.3 | H4 | 0.4 | 11 | 1.1 | EC | 20 | EMC | 67 | / | / | 0.5 |
| Example 2-32 | 9 | 2.2 | 3.3 | H4 | 0.4 | 11 | 1.1 | EC | 25 | EMC | 62 | / | / | 0.5 |

**Table 4**

| No. | Al/H | P/Al | Q+Al | A2/Al | B1/20+A1 | Cl/Al | Energy density (Wh/Kg) | DCR(mΩ) | Tₘₐₓ(°C) | Capacity retention rate of secondary battery at 45°C after 600 cycles | Volume expansion rate of the secondary battery after 30 days of storage at 60°C |
|---|---|---|---|---|---|---|---|---|---|---|---|
| Comparative Example 2-1 | / | / | / | / | / | / | 290.0 | 29.6 | 130 | 60.3% | 15.4% |
| Comparative Example 2-2 | 0.0011 | 330.0 | 2.21 | 1250 | 0.9 | 50.0 | 290.0 | 28.3 | 130 | 61.3% | 15.9% |
| Comparative Example 2-3 | 0.222 | 1.7 | 4.2 | 5.3 | 2.9 | 0.3 | 292.0 | 27.9 | 130 | 62.1% | 16.3% |
| Example 2-1 | 0.0056 | 66.0 | 2.3 | 250.0 | 1.0 | 10.0 | 290.1 | 21.5 | 140 | 77.6% | 12.4% |
| Example 2-2 | 0.011 | 33.0 | 2.3 | 124.0 | 1.0 | 5.0 | 290.1 | 21.8 | 140 | 78.4% | 12.3% |
| Example 2-3 | 0.022 | 16.5 | 2.4 | 61.5 | 1.1 | 2.5 | 290.2 | 21.9 | 140 | 79.5% | 12.1% |
| Example 2-4 | 0.033 | 11.0 | 2.5 | 40.7 | 1.2 | 1.7 | 290.3 | 22.3 | 140 | 80.2% | 11.4% |
| Example 2-5 | 0.044 | 8.3 | 2.6 | 30.3 | 1.3 | 1.3 | 290.4 | 22.7 | 140 | 79.3% | 11.1% |
| Example 2-6 | 0.056 | 6.6 | 2.7 | 24.0 | 1.4 | 1.0 | 290.5 | 24.1 | 135 | 76.5% | 12.1% |
| Example 2-7 | 0.089 | 4.1 | 3.0 | 14.6 | 1.7 | 0.6 | 290.8 | 24.4 | 135 | 76.4% | 12.4% |
| Example 2-8 | 0.111 | 3.3 | 3.2 | 11.5 | 1.9 | 0.5 | 291.0 | 24.8 | 135 | 75.9% | 12.7% |
| Example 2-9 | 0.156 | 2.4 | 3.6 | 7.9 | 2.3 | 0.4 | 291.4 | 25.1 | 135 | 75.2% | 12.9% |
| Example 2-10 | 0.044 | 8.3 | 2.6 | 30.0 | 1.3 | 1.3 | 290.4 | 23.1 | 140 | 80.2% | 12.1% |
| Example 2-11 | 0.044 | 8.3 | 2.6 | 28.8 | 1.3 | 1.3 | 290.4 | 22.9 | 140 | 79.9% | 11.8% |
| Example 2-12 | 0.044 | 8.3 | 2.6 | 27.5 | 1.3 | 1.3 | 290.4 | 22.2 | 140 | 79.1% | 11.3% |
| Example 2-13 | 0.044 | 8.3 | 2.6 | 25.0 | 1.3 | 1.3 | 290.4 | 21.8 | 140 | 78.6% | 11.7% |
| Example 2-14 | 0.044 | 8.3 | 2.6 | 20.0 | 1.3 | 1.3 | 290.4 | 21.7 | 140 | 78.1% | 12.0% |
| Example 2-15 | 0.044 | 8.3 | 1.9 | 27.5 | 1.3 | 1.3 | 290.4 | 20.2 | 140 | 81.1% | 11.5% |
| Example 2-16 | 0.044 | 8.3 | 2.4 | 27.5 | 1.3 | 1.3 | 290.4 | 19.8 | 140 | 80.6% | 11.3% |
| Example 2-17 | 0.044 | 8.3 | 3.4 | 27.5 | 1.3 | 1.3 | 290.4 | 19.5 | 140 | 80.3% | 11.0% |
| Example 2-18 | 0.044 | 8.3 | 3.9 | 27.5 | 1.3 | 1.3 | 290.4 | 20.1 | 140 | 80.1% | 10.8% |
| Example 2-19 | 0.044 | 8.0 | 2.6 | 27.5 | 1.3 | 1.3 | 285.4 | 17.8 | 140 | 79.1% | 11.3% |
| Example 2-20 | 0.044 | 8.5 | 2.6 | 27.5 | 1.3 | 1.3 | 295.4 | 18.3 | 140 | 78.4% | 11.6% |
| Example 2-21 | 0.044 | 8.8 | 2.6 | 27.5 | 1.3 | 1.3 | 300.4 | 18.6 | 140 | 78.1% | 11.9% |
| Example 2-22 | 0.044 | 9.0 | 2.6 | 27.5 | 1.3 | 1.3 | 305.4 | 18.9 | 140 | 77.6% | 12.1% |
| Example 2-23 | 0.044 | 9.3 | 2.6 | 27.5 | 1.3 | 1.3 | 310.4 | 19.4 | 140 | 77.1% | 12.6% |
| Example 2-24 | 0.044 | 8.3 | 2.6 | 27.5 | 1.3 | 0.3 | 290.4 | 18.9 | 140 | 78.3% | 10.9% |
| Example 2-25 | 0.044 | 8.3 | 2.6 | 27.5 | 1.3 | 0.5 | 290.4 | 19.1 | 140 | 78.5% | 11.1% |
| Example 2-26 | 0.044 | 8.3 | 2.6 | 27.5 | 1.3 | 2.5 | 290.4 | 19.3 | 140 | 79.3% | 11.3% |
| Example 2-27 | 0.044 | 8.3 | 2.6 | 27.5 | 1.3 | 3.8 | 290.4 | 19.6 | 140 | 80.1% | 11.6% |
| Example 2-28 | 0.044 | 8.3 | 2.6 | 27.5 | 1.3 | 6.3 | 290.4 | 20.0 | 140 | 80.2% | 12.1% |
| Example 2-29 | 0.044 | 8.3 | 2.6 | 27.5 | 0.9 | 1.3 | 290.4 | 22.2 | 140 | 79.1% | 11.3% |
| Example 2-30 | 0.044 | 8.3 | 2.6 | 27.5 | 1.2 | 1.3 | 290.4 | 21.7 | 140 | 78.4% | 11.1% |
| Example 2-31 | 0.044 | 8.3 | 2.6 | 27.5 | 1.4 | 1.3 | 290.4 | 21.1 | 140 | 77.6% | 11.4% |
| Example 2-32 | 0.044 | 8.3 | 2.6 | 27.5 | 1.7 | 1.3 | 290.4 | 20.6 | 140 | 77.0% | 12.1% |

Combining the test results in Tables 1 and 2, it can be seen that in the secondary battery with a thinned positive electrode collector, when the non-aqueous electrolyte contained the compound shown in Formula 1 and its content A1% and the thickness H µm of the positive electrode collector, the elongation at break Q% of the positive electrode collector and the compaction density P g/cm³ of the positive active material layer satisfied A1/H of 0.0015 to 0.20, Q+A1 of 1 to 4 and P/A1 of 2 to 340, the secondary battery can simultaneously have higher energy density, lower internal resistance, higher hot box safety performance, higher capacity retention, and lower volume expansion.

Combining the test results of Examples 1-1 to 1-10 and Comparative Example 1-2, it was clear that when A1/H was less than 0.0015 and/or P/A1 was greater than 340, there was no enough compound shown in Formula 1 to bond with Al³⁺ to form a passivation film on the surface of the positive electrode collector and a low-impedance interface film on the surface of the positive active material, thereby compared with Comparative Example 1-1, it did not effectively improve the negative impact of the thinning of positive electrode collector on power performance and safety performance, while the increase in secondary battery capacity retention was also limited.

Combining the test results of Examples 1-1 to 1-10 and Comparative Examples 1-3 to 1-4, it can be seen that when Q+A1 was greater than 4, A1/H was greater than 0.20, and/or P/A1 was less than 2, too much of the compound shown in Formula 1 lead to an increase in positive and/or negative interface impedance instead of a decrease, resulting in a higher internal resistance and poorer capacity retention of the secondary battery; although the compound shown in Formula 1 can contribute part of the active lithium ions and slightly increase the energy density of the secondary battery, the oxidative decomposition of the anions lead to higher gas production inside the battery and significantly poorer hot box safety performance.

Combining the test results in Table 3 and Table 4, it can be seen that in the secondary battery with a thinned positive electrode collector, when the non-aqueous electrolyte contained the compound shown in Formula 1 and its content A1% and the thickness H µm of the positive electrode collector, the elongation at break Q% of the positive electrode collector and the compaction density P g/cm³ of the positive active material layer satisfied A1/H of 0.0015 to 0.20, Q+A1 of 1 to 4 and P/A1 of 2 to 340, the secondary battery can simultaneously have higher energy density, lower internal resistance, higher hot box safety performance, higher capacity retention, and lower volume expansion.

Combining the test results of Examples 2-1 to 2-9 and Comparative Example 2-2, it can be seen that when A1/H was less than 0.0015, there was no enough compound shown in Formula 1 to bond with Al³⁺ to form a passivation film on the surface of the positive electrode collector and a low-impedance interface film on the surface of the positive active material, thereby compared with Comparative Example 2-1, it did not effectively improve the negative impact of the thinning of positive electrode collector on power performance and safety performance, while the increase in secondary battery capacity retention was also limited.

Combining the test results of Examples 2-1 to 2-9 and Comparative Example 2-3, it can be seen that when A1/H was greater than 0.20, P/A1 was less than 2 and Q+A1 was greater than 4, too much of the compound shown in Formula 1 lead to an increase in positive and/or negative interface impedance instead of a decrease, resulting in a higher internal resistance and poorer capacity retention of the secondary battery; although the compound shown in Formula 1 can contribute part of the active lithium ions and slightly increase the energy density of the secondary battery, the oxidative decomposition of the anions lead to higher gas production inside the battery and significantly poorer hot box safety performance.

It should be noticed that, described above are merely specific embodiments of the present application, but the protection scope of the present application is not limited to this. Therefore, the protection scope of the present application shall be subject to the protection scope of the claims.

## Claims

1. A secondary battery comprising a positive electrode plate, and a non-aqueous electrolyte, wherein the positive electrode plate comprises a positive electrode collector and a positive active material layer disposed on at least one surface of the positive electrode collector, wherein
the non-aqueous electrolyte comprises a compound shown in Formula 1, in which X and Y each independently represent a fluorine atom, or partially fluorinated or perfluorinated group selected from C1-C10 alkyl group, C2-C10 alkenyl group, C2-C10 alkynyl group, C6-C8 aryl group, C1-C10 alkoxy group, C2-C10 alkenoxy group, C2-C10 alkynloxy group, and C6-C8 aryloxy group, and at least one of X and Y represents a fluorine atom; 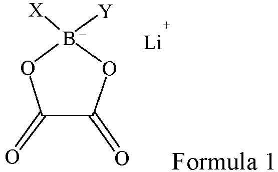
based on the total mass of the non-aqueous electrolyte, the compound shown in Formula 1 is present in an amount of A1% by mass; the positive electrode collector has a thickness of H µm, the positive active material layer has an elongation at break of Q%, the positive active material layer has a compaction density of P g/cm³, and the secondary battery satisfies: H is from 4 to 14, A1/H is from 0.0015 to 0.20, Q+A1 is from 1 to 4 and P/A1 is from 2 to 340.

2. The secondary battery according to claim 1, wherein
A1/H is from 0.002 to 0.05, optionally from 0.01 to 0.05; and/or,
Q+A1 is from 1.5 to 3.5, optionally from 2.0 to 3.5; and/or
P/A1 is from 5 to 340, optionally from 10 to 340.

3. The secondary battery according to claim 1 or 2, wherein
A1 is from 0.02 to 1.8, optionally from 0.02 to 0.5; and/or
Q is from 0.5 to 3.5, optionally from 1.5 to 3.5; and/or
P is from 3.2 to 3.7, optionally from 3.4 to 3.7.

4. The secondary battery according to any one of claims 1-3, wherein the non-aqueous electrolyte further comprises a first lithium salt comprising lithium hexafluorophosphate, and wherein the lithium hexafluorophosphate is present in an amount of A2% by mass, based on the total mass of the non-aqueous electrolyte;
optionally, A2/A1 is from 5 to 650, more optionally from 15 to 300; and/or
optionally, A2 is from 6 to 14.

5. The secondary battery according to any one of claims 1-3, wherein the non-aqueous electrolyte further comprises a first lithium salt comprising a combination of lithium hexafluorophosphate and lithium bis(fluorosulfonyl)imide, and wherein lithium hexafluorophosphate is present in an amount of A2% by mass and lithium bis(fluorosulfonyl)imide is present in an amount of A3% by mass, both based on the total mass of the non-aqueous electrolyte;
optionally, A2 is from 6 to 14, A3 is greater than 0 and less than or equal to 5; and/or
optionally, A3/A2 is 0.8 or less, more optionally 0.05 to 0.3; and/or
optionally, A2/A1 is from 5 to 650, more optionally from 15 to 300.

6. The secondary battery according to any one of claims 1-5, wherein the non-aqueous electrolyte further comprises a second lithium salt comprising at least one of lithium tetrafluoroborate, lithium perchlorate, lithium hexafluoroarsenate, lithium difluorophosphate, lithium difluorodioxalate phosphate and lithium tetrafluoroxalate phosphate, and wherein the second lithium salt is present in a total amount of A4% by mass in the non-aqueous electrolyte, based on the total mass of the non-aqueous electrolyte; optionally, A4 is 5 or less, more optionally 2 or less.

7. The secondary battery according to claim 6, wherein the second lithium salt comprises lithium difluorophosphate,
optionally, a mass ratio α of lithium difluorophosphate to lithium hexafluorophosphate is from 0.01 to 0.15, more optionally from 0.01 to 0.1.

8. The secondary battery according to any one of claims 1-7, wherein the non-aqueous electrolyte further comprises a cyclic carbonate compound, and wherein the cyclic carbonate compound is present in an amount of B1% by mass, based on the total mass of the non-aqueous electrolyte;
optionally, B1 is from 0.5 to 20, more optionally from 15 to 18; and/or
optionally, B1/20+A1 is from 1 to 3, more optionally from 1 to 2, and/or
optionally, wherein the cyclic carbonate compound comprises at least one of ethylene
carbonate, propylene carbonate, vinylene carbonate, vinyl ethylene carbonate.

9. The secondary battery according to any one of claims 1-8, wherein the non-aqueous electrolyte further comprises fluoroethylene carbonate and/or a moisture scavenger comprising at least one of hexamethyldisilazane, tris(trimethylsilyl)phosphate,
wherein fluoroethylene carbonate is present at a mass content of C1%, based on the total mass of the non-aqueous electrolyte;
optionally, 0 < C1 ≤ 2.5, more optionally, 0 < C1 ≤ 2.0; and/or
optionally, 0.25≤C1/A1≤25, more optionally, 0.5≤C1/A1≤10, and/or
optionally, the moisture scavenger is present in an amount 2% by mass or less, more optionally from 0.05% to 1% by mass, based on the total mass of the non-aqueous electrolyte.

10. The secondary battery according to claim 1, wherein X and Y satisfy one of the following conditions (1) to (3):
(1) both X and Y represent a fluorine atom;
(2) one of X and Y represents a fluorine atom and the other represents at least one of the group consisting of partially fluorinated or perfluorinated groups: C1-C5 alkyl, C2-C5 alkenyl, C2-C5 alkynyl, phenyl, phenoxy, C1-C5 alkoxy, C2-C5 alkenoxy and C2-C5 alkynyloxy;
(3) one of X and Y represents a fluorine atom and the other represents at least one of the group consisting of partially fluorinated or perfluorinated groups: methyl, ethyl, n-propyl, isopropyl, n-butyl, tert-butyl, vinyl, propyl, allyl, butadienyl, ethynyl, propynyl, phenyl, methoxy, ethoxy, propoxy, ethylenoxy, propenyloxy, ethynyloxy, propynyloxy and phenoxy.

11. The secondary battery according to claim 1, wherein the compound shown in Formula 1 comprises at least one of the following compounds:

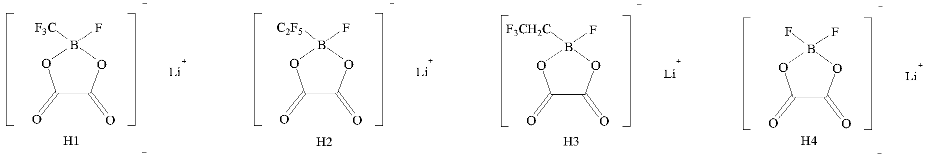

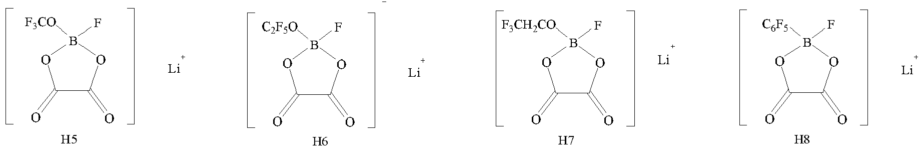

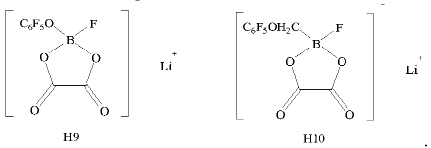

12. The secondary battery according to any one of claims 1-11, wherein
the positive electrode collector is made of aluminum foil or aluminum alloy foil.

13. A battery module comprising the secondary battery according to any one of claims 1 to 12.

14. A battery pack, comprising one of the secondary battery according to any one of claims 1 to 12 and the battery module according to claim 13.

15. An electrical device comprising at least one of the secondary battery according to any one of claims 1 to 12, the battery module according to claim 13 and the battery pack according to claim 14.

## Patentansprüche

1. Sekundärbatterie, umfassend eine positive Elektrodenplatte und einen nichtwässrigen Elektrolyten, wobei die positive Elektrodenplatte einen positiven Elektrodensammler und eine positive aktive Materialschicht umfasst, die auf mindestens einer Oberfläche des positiven Elektrodensammlers angeordnet ist,
wobei
der nichtwässrige Elektrolyt eine Verbindung der Formel 1 umfasst, in der X und Y jeweils unabhängig voneinander ein Fluoratom oder eine teilweise fluorierte oder perfluorierte Gruppe darstellen, ausgewählt aus C1-C10-Alkylgruppe, C2-C10-Alkenylgruppe, C2-C10-Alkinylgruppe, C6-C8-Arylgruppe, C1-C10-Alkoxygruppe, C2-C10-Alkenoxygruppe, C2-C10-Alkinloxygruppe und C6-C8-Aryloxygruppe, und mindestens eines von X und Y ein Fluoratom darstellt; 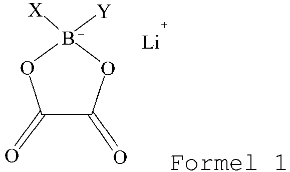
bezogen auf die Gesamtmasse des nichtwässrigen Elektrolyten, die in Formel 1 gezeigte Verbindung in einer Menge von A1 Massenprozent vorhanden ist; der positive Elektrodensammler eine Dicke von H µm hat, die positive aktive Materialschicht eine Bruchdehnung von Q% hat, die positive aktive Materialschicht eine Verdichtungsdichte von P g/cm³ hat, und die Sekundärbatterie erfüllt: H ist 4 bis 14, A1/H ist 0,0015 bis 0,20, Q+A1 ist 1 bis 4 und P/A1 ist 2 bis 340.

2. Sekundärbatterie nach Anspruch 1, wobei
A1/H 0,002 bis 0,05, optional 0,01 bis 0,05 beträgt; und/oder
Q+A1 1,5 bis 3,5, optional 2,0 bis 3,5 beträgt; und/oder P/A1 5 bis 340, optional 10 bis 340 beträgt.

3. Sekundärbatterie nach Anspruch 1 oder 2, wobei
A1 0,02 bis 1,8, optional 0,02 bis 0,5 beträgt; und/oder Q 0,5 bis 3,5, optional 1,5 bis 3,5 beträgt; und/oder P 3,2 bis 3,7, optional 3,4 bis 3,7 beträgt.

4. Sekundärbatterie nach einem der Ansprüche 1 bis 3, wobei der nichtwässrige Elektrolyt ferner ein erstes Lithiumsalz umfasst, das Lithiumhexafluorophosphat umfasst, und wobei das Lithiumhexafluorophosphat in einer Menge von A2 Massenprozent, bezogen auf die Gesamtmasse des nichtwässrigen Elektrolyten, vorhanden ist;
optional A2/A1 5 bis 650 beträgt, vorzugsweise 15 bis 300 beträgt; und/oder
optional A2 6 bis 14 beträgt.

5. Sekundärbatterie nach einem der Ansprüche 1 bis 3, wobei der nichtwässrige Elektrolyt ferner ein erstes Lithiumsalz umfasst, das eine Kombination aus Lithiumhexafluorophosphat und Lithiumbis(fluorsulfonyl)imid umfasst, und wobei Lithiumhexafluorophosphat in einer Menge von A2 Massenprozent und Lithium-bis(fluorosulfonyl)imid in einer Menge von A3 Massenprozent, jeweils bezogen auf die Gesamtmasse des nichtwässrigen Elektrolyten, vorhanden sind;
optional A2 6 bis 14 beträgt, A3 größer als 0 und kleiner oder gleich 5 ist; und/oder
optional A3/A2 0,8 oder weniger, noch optionaler 0,05 bis 0,3 ist; und/oder
optional A2/A1 5 bis 650, noch optionaler 15 bis 300 ist.

6. Sekundärbatterie nach einem der Ansprüche 1 bis 5, wobei der nichtwässrige Elektrolyt ferner ein zweites Lithiumsalz umfasst, das mindestens eines der folgenden Salze umfasst: Lithiumtetrafluorborat, Lithiumperchlorat, Lithiumhexafluoroarsenat, Lithiumdifluorophosphat Lithiumdifluordioxalatphosphat und Lithiumtetrafluoroxalatphosphat, und wobei das zweite Lithiumsalz in einer Gesamtmenge von A4 Massenprozent in dem nichtwässrigen Elektrolyten, bezogen auf die Gesamtmasse des nichtwässrigen Elektrolyten, vorhanden ist;
optional A4 5 oder weniger ist, noch optionaler 2 oder weniger. ist.

7. Sekundärbatterie nach Anspruch 6, wobei das zweite Lithiumsalz Lithiumdifluorophosphat umfasst,
optional ein Massenverhältnis α von Lithiumdifluorophosphat zu Lithiumhexafluorophosphat von 0,01 bis 0,15, noch optionaler von 0,01 bis 0,1 beträgt.

8. Sekundärbatterie nach einem der Ansprüche 1 bis 7, wobei der nichtwässrige Elektrolyt ferner eine cyclische Carbonatverbindung umfasst, und wobei die cyclische Carbonatverbindung in einer Menge von B1 Massenprozent, bezogen auf die Gesamtmasse des nichtwässrigen Elektrolyten, vorhanden ist;
optional B1 0,5 bis 20, noch optionaler 15 bis 18, ist; und/oder
optional B1/20+A1 1 bis 3, noch optionaler 1 bis 2, ist und/oder
optional, wobei die cyclische Carbonatverbindung mindestens eine der folgenden Verbindungen umfasst: Ethylencarbonat, Propylencarbonat, Vinylencarbonat, Vinylethylencarbonat.

9. Sekundärbatterie nach einem der Ansprüche 1 bis 8, wobei der nichtwässrige Elektrolyt ferner Fluorethylencarbonat und/oder einen Feuchtigkeitsfänger umfasst, der mindestens eines der folgenden umfasst:
Hexamethyldisilazan, Tris(trimethylsilyl)phosphat,
wobei Fluorethylencarbonat in einem Massenanteil von C1%, bezogen auf die Gesamtmasse des nichtwässrigen Elektrolyten, vorhanden ist;
optional 0 < C1 ≤ 2,5, noch optionaler 0 < C1 ≤ 2,0; und/oder
optional 0,25 ≤ C1/A1 ≤ 25, noch optionaler 0,5 ≤ C1/A1 ≤ 10, und/oder
optional der Feuchtigkeitsfänger in einer Menge von 2 Massenprozent oder weniger, noch optionaler von 0,05 Massenprozent bis 1 Massenprozent, bezogen auf die
Gesamtmasse des nichtwässrigen Elektrolyten, vorhanden ist.

10. Sekundärbatterie nach Anspruch 1, wobei X und Y eine der folgenden Bedingungen (1) bis (3) erfüllen:
(1) sowohl X als auch Y stehen für ein Fluoratom;
(2) eines von X und Y steht für ein Fluoratom und das andere steht für mindestens eine der Gruppen, bestehend aus teilweise fluorierten oder perfluorierten Gruppen: C1-C5-Alkyl, C2-C5-Alkenyl, C2-C5-Alkinyl, Phenyl, Phenoxy, C1-C5-Alkoxy, C2-C5-Alkenoxy und C2-C5-Alkinyloxy;
(3) eines von X und Y steht für ein Fluoratom und das andere steht für mindestens eine der Gruppen, bestehend aus teilweise fluorierten oder perfluorierten Gruppen: Methyl, Ethyl, n-Propyl, Isopropyl, n-Butyl, tert-Butyl, Vinyl, Propyl, Allyl, Butadienyl, Ethinyl, Propinyl, Phenyl, Methoxy, Ethoxy, Propoxy, Ethylenoxy, Propenyloxy, Ethynyloxy und Phenoxy.

11. Sekundärbatterie nach Anspruch 1, wobei die in Formel 1 gezeigte Verbindung mindestens eine der folgenden Verbindungen umfasst:

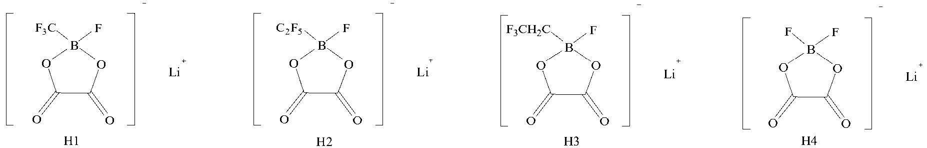

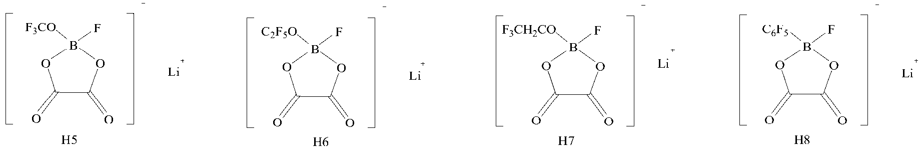

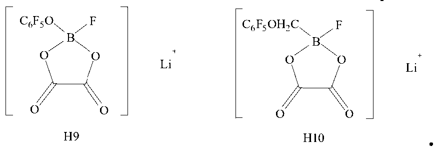

12. Sekundärbatterie nach einem der Ansprüche 1 bis 11, wobei
der positive Elektrodensammler aus Aluminiumfolie oder einer Aluminiumlegierungsfolie hergestellt ist.

13. Batteriemodul, das die Sekundärbatterie gemäß einem der Ansprüche 1 bis 12 umfasst.

14. Batteriepack, umfassend eine der Sekundärbatterien gemäß einem der Ansprüche 1 bis 12 und das Batteriemodul gemäß Anspruch 13.

15. Elektrisches Gerät, das mindestens eines von der Sekundärbatterie gemäß einem der Ansprüche 1 bis 12, dem Batteriemodul gemäß Anspruch 13 und dem Batteriepack gemäß Anspruch 14 umfasst.

## Revendications

1. Batterie secondaire comprenant une plaque d'électrode positive et un électrolyte non aqueux, dans laquelle la plaque d'électrode positive comprend un collecteur d'électrode positive et une couche de matériau actif positif disposée sur au moins une surface du collecteur d'électrode positive,
dans laquelle
l'électrolyte non aqueux comprend un composé représenté par la formule 1, dans laquelle X et Y représentent chacun indépendamment un atome de fluor, ou un groupe partiellement fluoré ou perfluoré choisi parmi un groupe alkyle en C1 à C10, un groupe alcényle en C2 à C10, un groupe alcynyle en C2 à C10, un groupe aryle en C6 à C8, un groupe alcoxy en C1 à C10, un groupe alcénoxy en C2 à C10, un groupe alcynyloxy en C2 à C10 et un groupe aryloxy en C6 à C8, et au moins l'un des symboles X et Y représente un atome de fluor ; 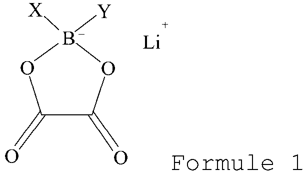
sur la base de la masse totale de l'électrolyte non aqueux, le composé représenté par la formule 1 est présent en une quantité de A1% en masse ; le collecteur d'électrodes positives a une épaisseur de H µm, la couche de matériau actif positif a un allongement à la rupture de Q%, la couche de matériau actif positif a une densité de compactage de P g/cm³, et la batterie secondaire satisfait aux conditions suivantes : H est de 4 à 14, A1/H est de 0,0015 à 0,20, Q+A1 est de 1 à 4 et P/A1 est de 2 à 340.

2. Batterie secondaire selon la revendication 1, dans laquelle
A1/H est de 0,002 à 0,05, facultativement de 0,01 à 0,05 ; et/ou,
Q+A1 est de 1,5 à 3,5, facultativement de 2,0 à 3,5 ; et/ou
P/A1 est de 5 à 340, facultativement de 10 à 340.

3. Batterie secondaire selon la revendication 1 ou 2, dans laquelle
A1 est de 0,02 à 1,8, facultativement de 0,02 à 0,5 ; et/ou
Q est de 0,5 à 3,5, facultativement de 1,5 à 3,5 ; et/ou
P est de 3,2 à 3,7, facultativement de 3,4 à 3,7.

4. Batterie secondaire selon l'une des revendications 1 à 3, dans laquelle l'électrolyte non aqueux comprend en outre un premier sel de lithium comprenant de l'hexafluorophosphate de lithium, et dans laquelle l'hexafluorophosphate de lithium est présent en une quantité de A2% en masse, par rapport à la masse totale de l'électrolyte non aqueux ;
facultativement, A2/A1 est de 5 à 650, plus facultativement de 15 à 300 ; et/ou
facultativement, A2 est de 6 à 14.

5. Batterie secondaire selon l'une des revendications 1 à 3, dans laquelle l'électrolyte non aqueux comprend en outre un premier sel de lithium comprenant une combinaison d'hexafluorophosphate de lithium et de bis(fluorosulfonyl)imide de lithium, et dans laquelle l'hexafluorophosphate de lithium est présent en une quantité de A2% en masse et le bis(fluorosulfonyl)imide de lithium est présent en une quantité de A3% en masse, les deux étant basés sur la masse totale de l'électrolyte non aqueux ;
facultativement, A2 est de 6 à 14, A3 est supérieur à 0 et inférieur ou égal à 5 ; et/ou
facultativement, A3/A2 est inférieur ou égal à 0,8, plus facultativement de 0,05 à 0,3 ; et/ou
facultativement, A2/A1 est de 5 à 650, plus facultativement de 15 à 300.

6. Batterie secondaire selon l'une des revendications 1 à 5, dans laquelle l'électrolyte non aqueux comprend en outre un deuxième sel de lithium comprenant au moins l'un des composés suivants : tétrafluoroborate de lithium, perchlorate de lithium, hexafluoroarsénate de lithium, difluorophosphate de lithium, phosphate de difluorodioxalate de lithium et phosphate de tétrafluoroxalate de lithium, et dans laquelle le deuxième sel de lithium est présent en une quantité totale de A4% en masse dans l'électrolyte non aqueux, par rapport à la masse totale de l'électrolyte non aqueux ;
facultativement, A4 est inférieur ou égal à 5, plus facultativement inférieur ou égal à 2.

7. Batterie secondaire selon la revendication 6, dans laquelle le deuxième sel de lithium comprend du difluorophosphate de lithium,
facultativement, un rapport massique α du difluorophosphate de lithium au hexafluorophosphate de lithium est de 0,01 à 0,15, plus facultativement de 0,01 à 0,1.

8. Batterie secondaire selon l'une des revendications 1 à 7, dans laquelle l'électrolyte non aqueux comprend en outre un composé de carbonate cyclique, et dans laquelle le composé de carbonate cyclique est présent en une quantité de B1% en masse, par rapport à la masse totale de l'électrolyte non aqueux ;
facultativement, B1 est de 0,5 à 20, plus facultativement de 15 à 18 ; et/ou
facultativement, B1/20+A1 est de 1 à 3, plus facultativement de 1 à 2, et/ou
facultativement, dans lequel le composé carbonate cyclique comprend au moins un parmi le carbonate d'éthylène, le carbonate de propylène, le carbonate de vinylène et le carbonate de vinyléthylène.

9. Batterie secondaire selon l'une des revendications 1 à 8, dans laquelle l'électrolyte non aqueux comprend en outre du carbonate de fluoroéthylène et/ou un piégeur d'humidité comprenant au moins l'un des composés suivants : hexaméthyldisilazane, tris(triméthylsilyl)phosphate,
dans laquelle le carbonate de fluoroéthylène est présent en une teneur en masse de C1%, par rapport à la masse totale de l'électrolyte non aqueux ;
facultativement, 0 < C1 ≤ 2,5, plus facultativement, 0 < C1 ≤ 2,0 ; et/ou
facultativement, 0,25 ≤ C1/A1 ≤ 25, plus
facultativement, 0,5 ≤ C1/A1 ≤ 10, et/ou
facultativement, le piégeur d'humidité est présent en une quantité de 2% en masse ou moins, plus facultativement de 0,05% à 1% en masse, par rapport à la masse totale de l'électrolyte non aqueux.

10. Batterie secondaire selon la revendication 1, dans laquelle X et Y satisfont à une des conditions (1) à (3) suivantes :
(1) X et Y représentent tous deux un atome de fluor ;
(2) l'un des X et Y représente un atome de fluor et l'autre représente au moins un des groupes constitués par les groupes partiellement fluorés ou perfluorés : alkyle en C1-C5, alcényle en C2-C5, alcynyle en C2-C5, phényle, phénoxy, alcoxy en C1-C5, alcénoxy en C2-C5 et alcynyloxy en C2-C5 ;
(3) l'un des X et Y représente un atome de fluor et l'autre représente au moins un des groupes constitués par les groupes partiellement fluorés ou perfluorés : méthyle, éthyle, n-propyle, isopropyle, n-butyle, tert-butyle, vinyle, propyle, allyle, butadiényle, éthynyle, propynyle, phényle, méthoxy, éthoxy, propoxy, éthylèneoxy, propényloxy, éthynyloxy, propynyloxy et phénoxy.

11. Batterie secondaire selon la revendication 1, dans laquelle le composé représenté par la formule 1 comprend au moins un des composés suivants :

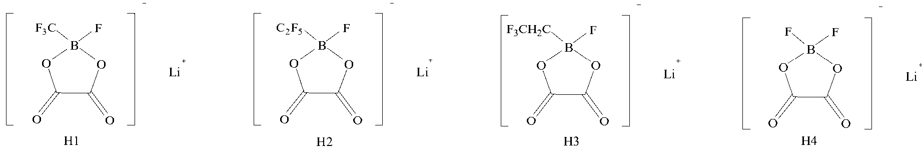

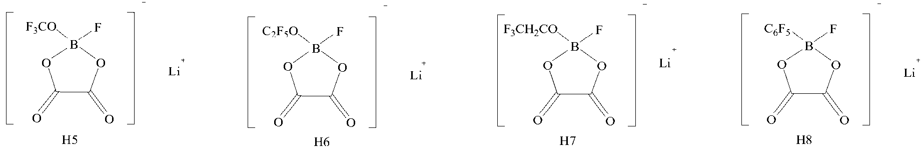

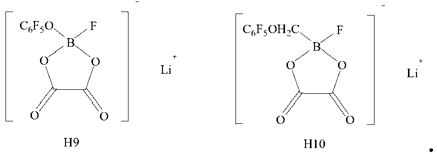

12. Batterie secondaire selon l'une des revendications 1 à 11, dans laquelle
le collecteur d'électrode positive est constitué d'une feuille d'aluminium ou d'une feuille d'alliage d'aluminium.

13. Module de batterie comprenant la batterie secondaire selon l'une des revendications 1 à 12.

14. Bloc de batteries, comprenant un parmi la batterie secondaire selon l'une des revendications 1 à 12 et le module de batterie selon la revendication 13.

15. Dispositif électrique comprenant au moins un parmi la batterie secondaire selon l'une des revendications 1 à 12, le module de batterie selon la revendication 13 et le bloc de batteries selon la revendication 14.
